# EUROPEAN PATENT APPLICATION

(11) **EP 4 834 055 A1**
(43) Date of publication of application: **04.11.2026**
(21) Application number: 24911947.0
(22) Date of filing: 22.10.2024
(51) Int. Cl.: A01B 59/042, A01B 59/043, A01B 61/02, A01B 63/08

(54) **WORK VEHICLE**

(30) Priority: 26.12.2023 JP 2023219558; 02.05.2024 JP 2024074591
(71) Applicant: KUBOTA CORPORATION, Osaka-shi, Osaka 530-0011 (JP)
(72) Inventor: TAKECHI, Kanta, Sakai-shi, Osaka 590-0908 (JP); KUSHIDA, Takahiro, Sakai-shi, Osaka 590-0908 (JP); TANAKA, Kensuke, Sakai-shi, Osaka 590-0908 (JP)
(74) Representative: Cabinet Beau de Loménie
(86) International application number: PCT/JP2024/037492
(87) International publication number: WO 2025/142054

(57) **Abstract**

Provided is a working vehicle (1) that enables the position of a working device (U1) relative to a vehicle body (2) to be easily changed and achieves excellent work performance.

A working vehicle (2) includes a vehicle body (2) to travel, a coupler (6) to which a working device (U2) is to be coupled, and a movement mechanism (80) to be attached to the vehicle body (2) and to couple and support the coupler (6) movably in a width direction of the vehicle body (2).

## Description

### Technical Field

The present invention relates to working vehicles to which a working device can be coupled.

### Background Art

A working vehicle such as a tractor in the related art includes a prime mover, a coupler (two-point linkage or three-point linkage) that couples a working device such as a tiller, and a PTO mechanism that transmits output of the prime mover to the working device coupled to the coupler. The above working device is coupled to the working vehicle through the coupler, and is actuated by the output of the prime mover transmitted from the PTO mechanism to perform predetermined work (cultivation work, cleaning work, and the like). This type of coupler includes a linkage body including a base end portion coupled to a vehicle body of the working vehicle rotatably about a shaft extending in the lateral direction and a tip portion opposite the base end portion. The working device is coupled to the tip portion of the linkage body. Thus, this type of coupler raises and lowers the working device coupled to the tip portion of the linkage body by swinging (rotating) the linkage body about the base end portion (shaft).

### Citation List

### Patent Literature

PTL 1: Japanese Unexamined Patent Application Publication No. 2023-159517
PTL 2: Japanese Unexamined Patent Application Publication No. 2009-232766

### Summary of Invention

### Technical Problem

However, in the case of a working vehicle to which a working device is coupled through a coupler like a working vehicle of PTL 1 mentioned above, when the working position of the working device deviates from a target position, it is necessary to correct the position of the working device by adjusting the traveling direction of the working vehicle.

Further, with a coupler (linkage device) of PTL 2 mentioned above, when a working device is raised or lowered, the working device moves along an arcuate trajectory in accordance with rotation of a linkage body. Thus, for example, in a case where the working device is a rotary cultivator that cultivates soil, when the working device is raised while a rotary is rotated, a form in which the working device is swung upward obliquely rearward is made, and cultivated soil is sometimes scattered rearward. That is, although there are working devices that are preferably raised and lowered straight in the up-down direction, the coupler of PTL 2 cannot raise and lower the working device straight in the up-down direction.

The present invention has been made in view of the above-described problems, and an object thereof is to provide working vehicles each of which enables the position of a working device to be easily changed and has excellent work performance. Further, an object of the present invention is to provide working vehicles each capable of raising and lowering a working device straight at least in the up-down direction.

### Solution to Problem

The present invention includes the following technical feature(s) in order to attain the above objects.

A working vehicle according to an example embodiment of the present invention includes a vehicle body to travel, a coupler to which a working device is to be coupled, and a movement mechanism to be attached to the vehicle body and to couple and support the coupler movably in a width direction of the vehicle body.

The movement mechanism may include a rail extending in the width direction, a slider coupled to the rail movably in the width direction, and a slider driver to move the slider along the rail. The coupler may be provided on the slider.

The rail may extend in the width direction orthogonal to a vehicle body center line passing through a center in the width direction and extending in a traveling direction of the vehicle body.

The working vehicle may further include a traveling device to support the vehicle body such that the vehicle body is allowed to travel. The traveling device may include a front traveling device located at a front portion of the vehicle body in a traveling direction of the vehicle body, and a rear traveling device located at a rear portion of the vehicle body in the traveling direction of the vehicle body. The rail may be located rearward of the rear traveling device.

The coupler may include a prime mover to drive the working device.

The prime mover may be an electric motor to be driven by being supplied with electric power from the vehicle body.

The coupler may include a linkage mechanism pivotally supported by a rear portion of the slider, and a hitch frame coupled to the linkage mechanism and to couple the working device. The prime mover may be provided on the hitch frame.

The prime mover may be located on a rearward extended line of a center of the slider in the width direction.

A working vehicle according to another example embodiment of the present invention includes a vehicle body to travel and a coupler to be attached to the vehicle body, wherein the coupler includes a first unit directly or indirectly supported by the vehicle body and a second unit including a coupling portion to which a working device to perform predetermined work is coupleable, and the first unit supports the second unit linearly movably at least in an up-down direction among linear directions orthogonal to a lateral direction orthogonal to the up-down direction and a front-rear direction.

The first unit may include a guide device to guide the second unit in the up-down direction.

The guide device may include a guide body extending in one of the linear directions and a guided body to be guided by the guide body and to which the second unit is directly or indirectly coupled. The coupler may be configured to maintain the guide body in an orientation in which the guide body extends in the up-down direction when at least the coupling portion is raised or lowered in the up-down direction.

The coupler may include a first actuator to linearly move the second unit.

The first unit may be rotatable about a shaft extending in the lateral direction.

The coupler may include a second actuator to rotate the first unit about the shaft.

The second actuator may be a cylinder device to extend and retract and be positioned to connect between the first unit and the vehicle body.

The coupler may include an arm including a base end portion coupled to the vehicle body and a tip portion opposite the base end portion, the arm extending outward from the vehicle body in a direction orthogonal to the up-down direction. The first unit may be coupled to the tip portion of the arm through the shaft.

A lower end portion of the first unit may be coupled to the tip portion of the arm through the shaft.

The second unit may include an electric motor to drive the working device coupled to the coupling portion, the electric motor being driven by being supplied with electric power from the vehicle body.

The electric motor may be swingable about a support shaft extending in the lateral direction.

The first unit may include a connection portion to which the second unit is to be connected, the connection portion including a longitudinal shaft extending in the front-rear direction. The second unit may be connected to the connection portion through the longitudinal shaft and be rotatable about the longitudinal shaft.

The coupler may include a third actuator to rotate the second unit about the longitudinal shaft.

The third actuator may be a cylinder device to extend and retract and be positioned to connect between the first unit and the second unit.

The coupler may be attached to at least one of a front end or a rear end of the vehicle body.

### Advantageous Effects of Invention

According to the present invention, it is possible to provide the working vehicle that can change the position of the working device by moving the coupler in the width direction of the vehicle body and has excellent work performance.

Further, according to the present invention, it is possible to raise and lower the working device straight at least in the up-down direction.

### Brief Description of Drawings

[FIG. 1] FIG. 1 is a left side view of a working vehicle of a first example embodiment.
[FIG. 2] FIG. 2 is a top view of the working vehicle of the first example embodiment.
[FIG. 3] FIG. 3 is a rear perspective view of a linkage mechanism and a movement mechanism.
[FIG. 4] FIG. 4 is a rear perspective view of the linkage mechanism.
[FIG. 5] FIG. 5 is a rear perspective view of a hitch frame.
[FIG. 6] FIG. 6 is a rear view of the hitch frame.
[FIG. 7] FIG. 7 is a top view, partly in section, depicting a periphery of an attachment portion of an auxiliary prime mover.
[FIG. 8] FIG. 8 is a side view, partly in section, depicting a periphery of the attachment portion of the auxiliary prime mover.
[FIG. 9] FIG. 9 is a left side view of a working vehicle according to a second example embodiment, and is a left side view when a coupler is set to a first state.
[FIG. 10] FIG. 10 is a left side view of the working vehicle according to the second example embodiment, and is a left side view when the coupler is set to a second state.
[FIG. 11] FIG. 11 is a left side view of the coupler according to the second example embodiment, and is a left side view of the coupler in the first state.
[FIG. 12] FIG. 12 is a rear view of the coupler according to the second example embodiment as viewed from the rear side, and is a rear view of the coupler in the first state.
[FIG. 13] FIG. 13 is a rear view of the coupler according to the second example embodiment as viewed from the rear side, and is a rear view of a state in which a second unit is rotated toward one (right) side about a longitudinal shaft when the coupler is in the first state.
[FIG. 14] FIG. 14 is a rear view of the coupler according to the second example embodiment as viewed from the rear side, and is a rear view of a state in which the second unit is rotated toward the other (left) side about the longitudinal shaft when the coupler is in the first state.
[FIG. 15] FIG. 15 is a schematic partial perspective view of a guide device included in the coupler according to the second example embodiment as viewed obliquely from below.
[FIG. 16] FIG. 16 is a schematic diagram of the guide device included in the coupler according to the second example embodiment, and is a partial side view of the guide device with part thereof indicated by virtual lines.
[FIG. 17] FIG. 17 is a cross-sectional view taken along line IX-IX in FIG. 9.
[FIG. 18] FIG. 18 is a left side view of a first unit of the coupler according to the second example embodiment, and is a left side view of the first unit of the coupler in the first state.
[FIG. 19] FIG. 19 is a rear view of the first unit of the coupler according to the second example embodiment as viewed from the rear side, and is a rear view of the coupler (first unit) in the first state in which depiction of the second unit and some components is omitted.
[FIG. 20] FIG. 20 is a left side view of the second unit of the coupler according to the second example embodiment, and is a left side view of the second unit of the coupler in the first state.
[FIG. 21] FIG. 21 is a rear view of the second unit of the coupler according to the second example embodiment as viewed from the rear side, and is a rear view of the coupler (second unit) in the first state in which depiction of the first unit and some components is omitted.
[FIG. 22] FIG. 22 is an explanatory diagram of a coupling portion (lower coupling portion) of the coupler according to the second example embodiment.
[FIG. 23] FIG. 23 is an explanatory diagram of the coupling portion (an upper coupling portion) of the coupler according to the second example embodiment.
[FIG. 24] FIG. 24 is an enlarged view of a principal portion around a device electric motor of the coupler according to the second example embodiment.
[FIG. 25] FIG. 25 is a schematic block diagram of an electrical system of the working vehicle according to the second example embodiment.
[FIG. 26] FIG. 26 is a schematic partial perspective view of the guide device included in the coupler of a variation as viewed obliquely from below.
[FIG. 27] FIG. 27 is a rear view of the coupler of a variation as viewed from the rear side, and is a rear view of the coupler in the first state.
[FIG. 28] FIG. 28 is a left side view of the coupler of a variation, and is a left side view of the coupler in the first state.
[FIG. 29] FIG. 29 is a rear view of the coupler depicted in FIG. 28.
[FIG. 30] FIG. 30 is a left side view of the working vehicle of a variation.
[FIG. 31] FIG. 31 is a schematic left side view for explaining an example of a working device coupled to the working vehicle according to the second example embodiment.

### Description of Embodiments

Example embodiments of the present invention are described with reference to the drawings.

### First example embodiment

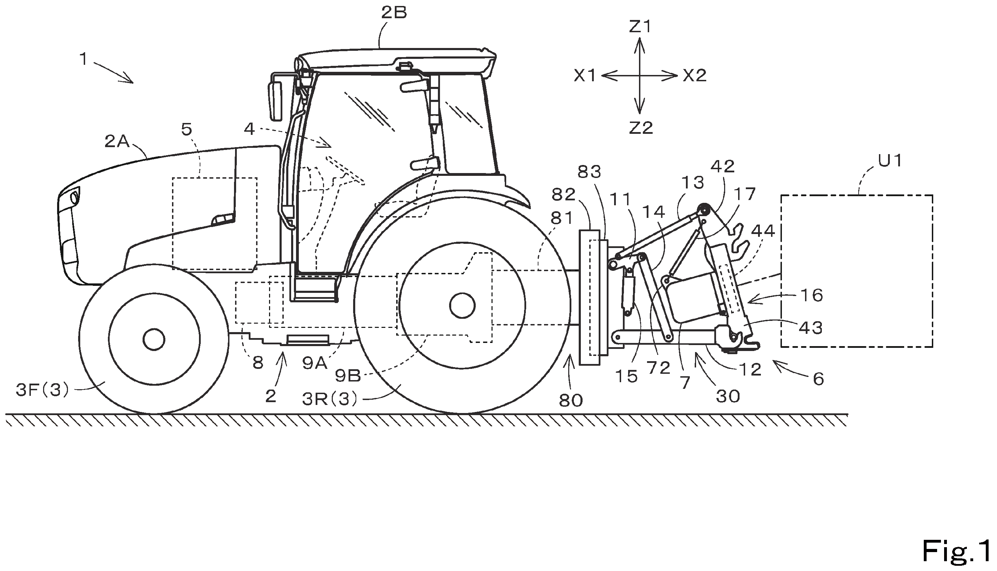

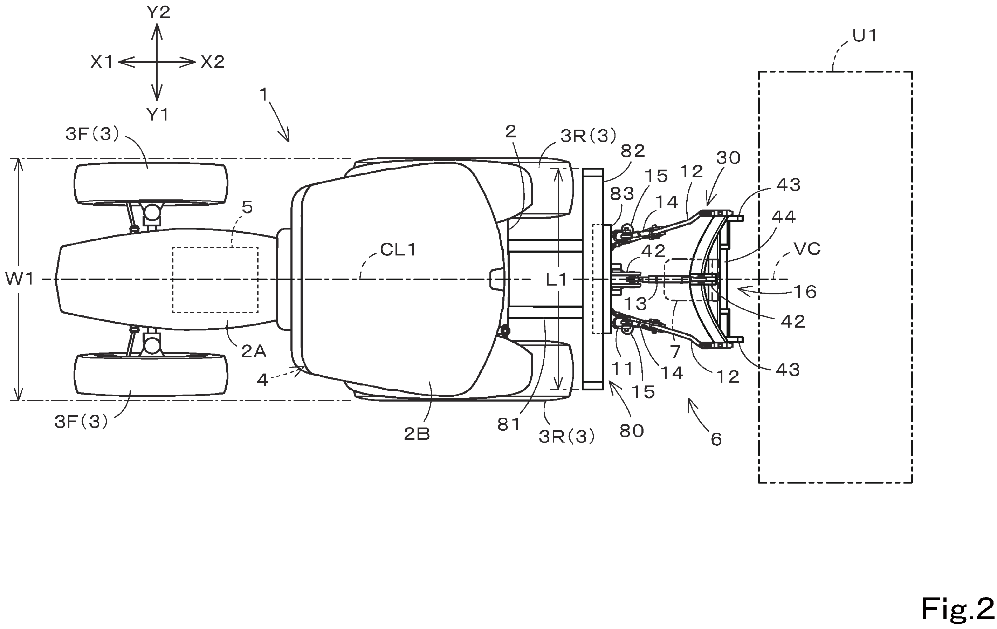

A working vehicle 1 of a first example embodiment is a traveling vehicle to travel. As depicted in FIGS. 1 and 2, the working vehicle 1 of the first example embodiment is a tractor, and includes a vehicle body 2, at least one traveling device 3, an operator's seat 4, a main prime mover 5 for traveling, a coupler 6, a battery 8, and a movement mechanism 80. The working vehicle 1 according to the present invention is not limited to the tractor. For example, the working vehicle 1 according to the present invention may be an agricultural machine other than the tractor, a construction machine, a transport machine, a utility vehicle, or the like.

Hereinafter, in the description of the first example embodiment, the length direction of the vehicle body 2 (a direction indicated by arrows X1 and X2 in FIGS. 1 and 2), which is the straight traveling direction of the working vehicle 1, is defined as the front-rear direction. The width direction of the vehicle body 2 (a direction indicated by arrows Y1 and Y2 in FIG. 2) is defined as the left-right direction. The height direction of the vehicle body 2 (a direction indicated by arrows Z1 and Z2 in FIG. 1) is defined as the up-down direction.

The vehicle body 2 includes a combination of metal frame members and the like, and is supported by at least one traveling device 3. The vehicle body 2 includes a hood 2A and a cabin 2B. The hood 2A is provided at a front upper portion of the vehicle body 2, and covers an upper portion of the vehicle body 2 on the front side of the operator's seat 4. In other words, the operator's seat 4 is provided rearward of the hood 2A in the upper portion of the vehicle body 2. The cabin 2B covers the periphery of the operator's seat 4 in the upper portion of the vehicle body 2. The cabin 2B is a protective structure that protects the operator's seat 4. The working vehicle 1 may include a canopy instead of the cabin 2B as the protective structure.

As depicted in FIG. 1, a clutch housing 9A and a transmission case 9B are provided at a rear portion of the vehicle body 2. The clutch housing 9A houses a clutch, and is provided consecutively with the main prime mover 5. The transmission case 9B houses a transmission, a rear wheel differential device, and the like, and is provided consecutively with the clutch housing 9A.

At least one traveling device 3 supports the vehicle body 2 such that the vehicle body 2 is allowed to travel. At least one traveling device 3 of the first example embodiment is at least one wheel rotatably provided on the vehicle body 2. As depicted in FIGS. 1 and 2, at least one traveling device 3 includes front wheels 3F as front traveling devices provided at a front portion of the vehicle body 2 on the left and right, respectively, and rear wheels 3R as rear traveling devices provided at a rear portion of the vehicle body 2 on the left and right, respectively. Among the traveling devices 3, one or both of the front wheels 3F and the rear wheels 3R may be crawlers.

The main prime mover 5 is provided at the front upper portion of the vehicle body 2, and is housed inside the hood 2A. The main prime mover 5 of the first example embodiment is a diesel engine. The main prime mover 5 may be a gasoline engine, or may be a hydrogen engine driven by combustion energy of a hydrogen gas. Alternatively, the main prime mover 5 may be an electric motor driven by electric power generated by a fuel cell or electric power charged into the battery 8 from an external power supply, or may be a hybrid-type prime mover including a combination of an engine and an electric motor.

An alternator is connected to the main prime mover 5 of the first example embodiment. The alternator is connected to a drive shaft of the main prime mover 5 through a power transmission belt, and is rotationally driven by power of the main prime mover 5 to generate electricity. Further, the electricity generated by the alternator is supplied to the battery 8 by an isolator.

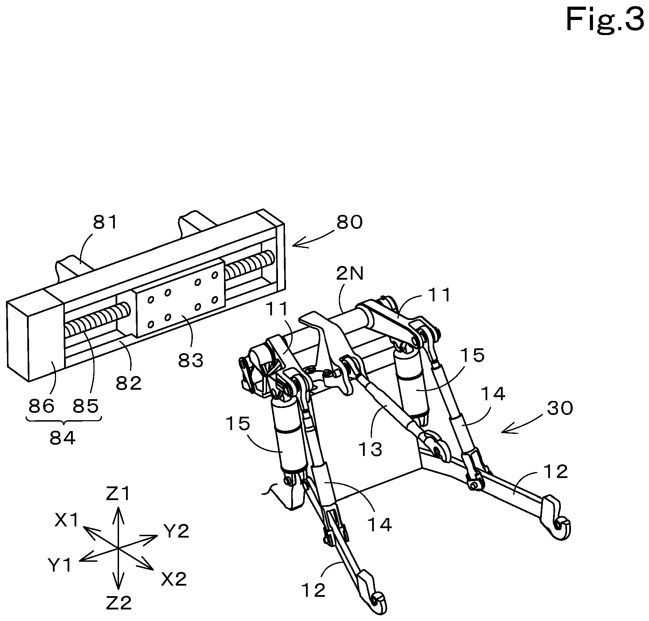

The movement mechanism 80 supports the coupler 6 movably in the left-right direction at the rear portion of the vehicle body 2. Details of the coupler 6 are described later. The movement mechanism 80 of the first example embodiment is an actuator that moves the coupler 6 in the left-right direction of the vehicle body 2. As depicted in FIG. 3, the movement mechanism 80 includes a base portion 81, a rail 82, a slider 83, and a slider driver 84. The slider driver 84 includes a power transmission shaft 85 and a drive motor 86.

As depicted in FIGS. 1 and 2, the base portion 81 is a frame body that supports the rail 82, and is coupled to and supported by the rear portion of the vehicle body 2. The base portion 81 extends from the rear portion of the vehicle body 2 to a position rearward of the rear wheels 3R. The rail 82 is a frame body that guides the slider 83 in the extension direction thereof, and extends in the left-right direction at a rear end portion of the base portion 81. That is, the rail 82 is located rearward of the rear wheels (rear traveling devices) 4R.

As depicted in FIG. 2, the rail 82 extends in the left-right direction orthogonal to a vehicle body center line CL1 passing through the center in the left-right direction (width direction) and extending in the front-rear direction (traveling direction) of the vehicle body 2. The rail 82 has a length L1 shorter than an outer width W1 of the rear wheels 3R provided on the left and right of the vehicle body 2.

The slider 83 is a pedestal that supports the coupler 6, and is coupled to the rail 82 movably in the extension direction thereof. That is, the slider 83 supports the coupler 6 movably in the left-right direction within a range inside the outer width W1 of the rear wheels 3R on the left and right.

As depicted in FIG. 3, the slider driver 84 is a device that moves the slider 83 along the rail 82. The power transmission shaft 85 is a ball screw shaft that transmits power of the drive motor 86 to the slider 83, and extends in parallel with the rail 82, and is inserted through the slider 83. The power transmission shaft 85 is coupled to a drive shaft of the drive motor 86.

The drive motor 86 is an electric motor that rotationally drives the power transmission shaft 85, and is driven by being supplied with electric power from the vehicle body 2. Accordingly, when the drive shaft of the drive motor 86 is rotationally driven, the power transmission shaft 85 is also rotationally driven in accordance therewith. As a result, the slider 83 slides along the rail 82 within the extension range thereof. Thus, the position of the coupler 6 moves in the left-right direction.

As described above, with the working vehicle 1 of the first example embodiment, the coupler 6 can be moved to any position in the left-right direction. Thus, when a working device U1 is coupled to the vehicle body 2, even if the position of a driven shaft US of the working device U1 deviates in the left-right direction relative to a drive shaft 7S of an auxiliary prime mover 7, the position of the auxiliary prime mover 7 can be adjusted in the left-right direction, and thus the working device U1 can be smoothly coupled to the auxiliary prime mover 7.

The coupler 6 is a device that couples the working device (an implement) U1 to the vehicle body 2. As depicted in FIGS. 1 and 2, the coupler 6 of the first example embodiment is connected to the rear portion of the vehicle body 2 through the movement mechanism 80. The coupler 6 of the first example embodiment is provided on the slider 83 of the movement mechanism 80. The working vehicle 1 of the first example embodiment can be used while the working device U1 having various applications and functions, such as a baler, a tiller, a spreader, and a seeder, is replaced and attached to the coupler 6 as appropriate.

As depicted in FIGS. 1 to 4, the coupler 6 includes at least one lift arm 11, at least one lower link 12, a top link 13, at least one lift rod 14, at least one lift cylinder 15, and a hitch frame 16. Further, as depicted in FIG. 1, the coupler 6 includes a suspender 17. The coupler includes the prime mover (hereinafter, referred to as the auxiliary prime mover) 7 that drives the working device U1. In the first example embodiment, the auxiliary prime mover 7 is an electric motor driven using electricity stored in the battery 8 as power.

As depicted in FIG. 2, based on a virtual line VC that divides the slider 83 at the center thereof in the left-right direction, the lift arms 11, the lower links 12, the lift rods 14, and the lift cylinders 15 are all provided on the left and right, respectively, across the virtual line VC.

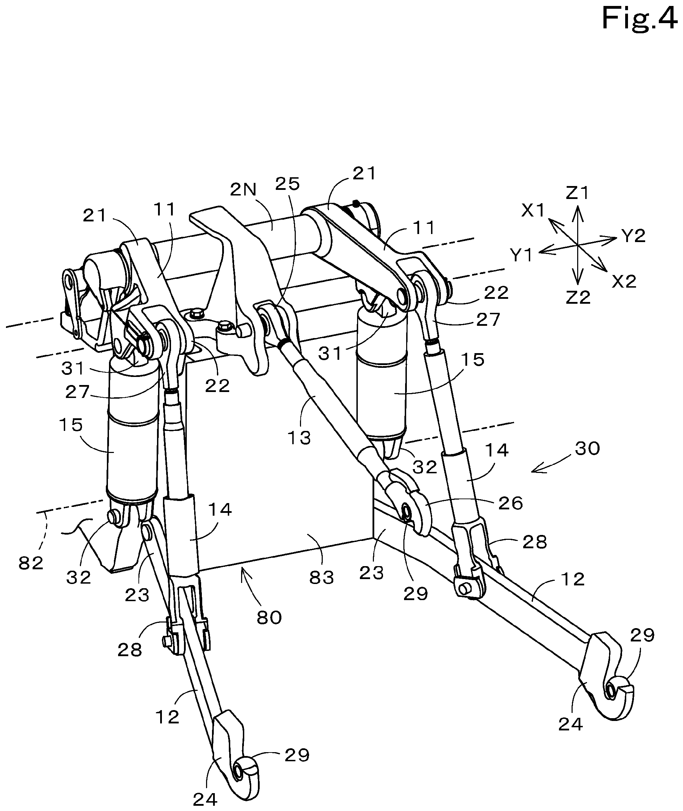

The lift arms 11, the lower links 12, and the top link 13 are each a frame elongated in one direction, and are each pivotally supported swingably by a rear portion of the slider 83. Specifically, as depicted in FIG. 4, the lift arms 11 each include a first end portion 21 coupled to an arm support shaft 2N extending in the left-right direction at the rear portion of the slider 83 rotatably about the arm support shaft 2N. On the other hand, second end portions 22 of the lift arms 11 are coupled to the lift rods 14. The lift arms 11 extend rearward from the arm support shaft 2N.

The lower links 12 each include a first end portion 23 coupled to a lower portion of the slider 83 rotatably about an axial line thereof extending in the left-right direction. On the other hand, second end portions 24 of the lower links 12 are coupled to the hitch frame 16. The lower links 12 extend rearward from the lower portion of the slider 83.

The top link 13 includes a first end portion 25 coupled to an upper portion of the slider 83 rotatably about an axial line thereof extending in the left-right direction. On the other hand, a second end portion 26 of the top link 13 is coupled to the hitch frame 16.

The lift rods 14 each couple the lift arm 11 and the lower link 12 on the same side in the left-right direction. Specifically, the lift rods 14 each include a first end portion 27 coupled to the second end portion 22 of the lift arm 11 rotatably about an axial line thereof extending in the left-right direction. On the other hand, a second end portion 28 of each of the lift rods 14 is coupled to a portion between both end portions 23 and 24 (an intermediate portion) of the lower link 12 rotatably about an axial line thereof extending in the left-right direction. The lift rods 14 each extend between the lift arm 11 and the lower link 12 on the same side in the left-right direction.

A joint 29 is provided at each of the second end portion 24 of the left lower link 12, the second end portion 24 of the right lower link 12, and the second end portion 26 of the top link 13. The hitch frame 16 is removably coupled to the joints 29 at these three positions. That is, as depicted in FIGS. 1 and 2, the coupler 6 of the first example embodiment supports the hitch frame 16 by a linkage mechanism 30 including three links, that is, the left and right lower links 12 and the top link 13 located above the center between the left and right lower links 12. Further, the working device U1 used while being coupled to the working vehicle 1 of the first example embodiment includes, for example, one engagement portion at an upper position on the working vehicle 1 side and two engagement portions on the left and right at lower positions, and is coupled to the hitch frame 16 by these three engagement portions. Details of the hitch frame 16 are described later.

The lift cylinders 15 of the first example embodiment are hydraulic cylinders that extend and retract in the extension direction thereof by hydraulic pressure, and each couple the lift arm 11 on the same side in the left-right direction and the slider 83. Specifically, as depicted in FIG. 4, a first end portion 31 of each of the lift cylinders 15 is coupled to a portion between both end portions 21 and 22 (an intermediate portion) of the lift arm 11 rotatably about an axial line thereof extending in the left-right direction. On the other hand, second end portions 32 of the lift cylinders 15 are coupled to the rear portion of the slider 83 rotatably about an axial line thereof extending in the left-right direction.

Accordingly, when the lift cylinders 15 are extended, the lift arms 11 swing upward with the first end portions 21 being fulcrums, and pull up the lift rods 14. As a result, the lower links 12 are pulled up in conjunction therewith, and swing upward with the first end portions 23 being fulcrums. On the other hand, when the lift cylinders 15 are retracted, the lift arms 11 swing downward with the first end portions 21 being fulcrums, and pull down the lift rods 14. In association therewith, the lower links 12 are also pulled down in conjunction therewith, and swing downward with the first end portions 23 being fulcrums. In this manner, the coupler 6 swings the lower links 12 upward and downward by the lift cylinders 15.

The top link 13 includes the first end portion 25 rotatably coupled to the slider 83. Further, the second end portion 26 of the top link 13 is coupled to the hitch frame 16 together with the second end portions 24 of the lower links 12. That is, the second end portion 26 of the top link 13 and the second end portions 24 of the lower links 12 are coupled through the hitch frame 16. Accordingly, when the lower links 12 are swung upward or downward in the above-described manner, the top link 13 also follows the movement to swing upward or downward. The hitch frame 16 is supported by the linkage mechanism 30 including these three links 12 and 13 movably upward and downward.

The lift cylinders 15 are connected to a hydraulic pump mounted in the vehicle body 2 through a hydraulic circuit, and operation of the lift cylinders 15 is controlled by a controller of the vehicle body 2. The left and right lift cylinders 15 are each independently controllable in operation. The lift cylinders 15 may be electric cylinders driven by electric power supplied from the vehicle body 2.

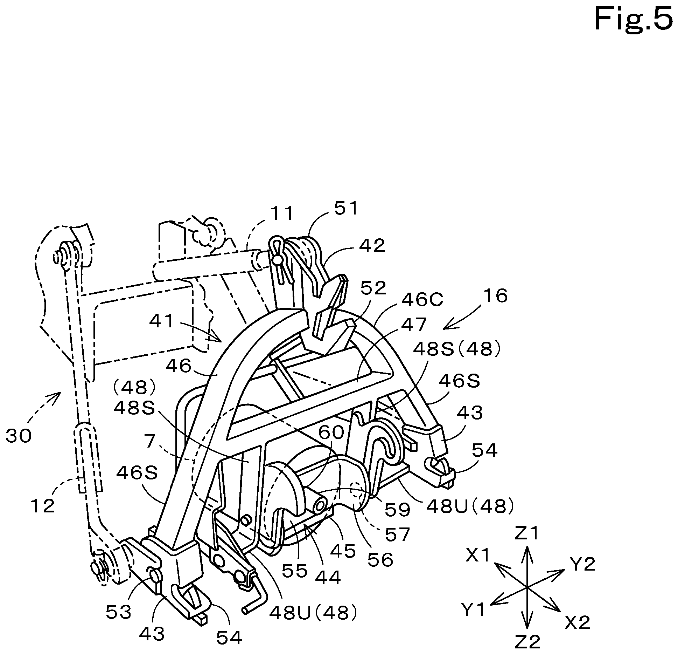

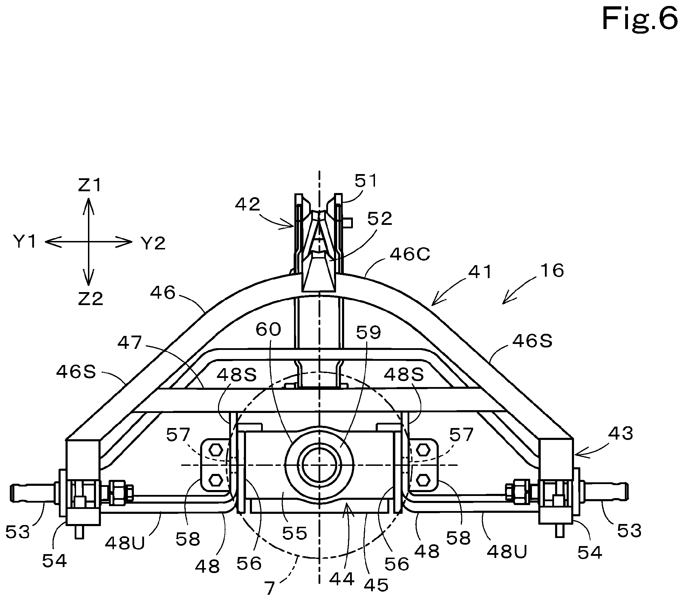

As depicted in FIGS. 5 and 6, the hitch frame 16 includes a frame body 41, an upper coupling portion 42, at least one lower coupling portion 43, a bracket 44, and a protective member 45. The frame body 41 includes a metal material containing iron as a main component. The frame body 41 includes a main frame portion 46, an intermediate crosspiece 47, and at least one auxiliary frame portion 48.

The main frame portion 46, the intermediate crosspiece 47, and at least one auxiliary frame portion 48 each include a square pipe, a round pipe, a flat bar, or the like. The main frame portion 46 is curved into an arch shape. Specifically, the main frame portion 46 is provided such that a central portion 46C in the left-right direction is curved in a substantially arcuate shape that is convex upward and both side portions 46S in the left-right direction continuously extend from the central portion 46C obliquely downward and outward in the left-right direction. The intermediate crosspiece 47 extends in the left-right direction at a substantially central position of the main frame portion 46 in the up-down direction, and couples the left and right side portions 46S to each other.

The auxiliary frame portions 48 are each bent into a substantially L-shape, and are located at lower end portions of the main frame portion 46 on the left and right, respectively, with a spacing therebetween in the left-right direction. Specifically, the auxiliary frame portions 48 are each provided such that a lower portion 48U extends from a lower end portion of the side portion 46S of the main frame portion 46 toward the center side in the left-right direction and an inner portion 48S extends upward from an end portion of the lower portion 48U on the center side in the left-right direction. The upper ends of the inner portions 48S of the auxiliary frame portions 48 are coupled to the intermediate crosspiece 47. The inner portions 48S of the left and right auxiliary frame portions 48 are arranged substantially in parallel with each other with a predetermined spacing therebetween in the left-right direction. The bracket 44 is located between the left and right inner portions 48S. Details of the bracket 44 are described later.

The upper coupling portion 42 is provided at the central portion 46C of the main frame portion 46. The upper coupling portion 42 includes a first link portion 51 and at least one first hook portion 52. The first link portion 51 is provided at an upper portion of the upper coupling portion 42, and pivotally supports the second end portion 26 of the top link 13. At least one first hook portion 52 is provided at a rear portion of the upper coupling portion 42, and engages with an upper engagement portion of the working device U1 to hold the upper engagement portion. The first hook portions 52 of the first example embodiment are provided at two positions as upper and lower positions on the rear portion of the upper coupling portion 42. Accordingly, the upper engagement portion of the working device U1 can be engaged with the hitch frame 16 at vertically different heights. The first hook portion 52 may be provided at only one position on the rear portion of the upper coupling portion 42.

The lower coupling portions 43 are provided at the lower end portions of the left and right side portions 46S, respectively, of the main frame portion 46. The left and right lower coupling portions 43 each include a second link portion 53 and a second hook portion 54. The second link portions 53 are provided at outer portions of the lower coupling portions 43, and pivotally support the second end portions 24 of the lower links 12. The second hook portions 54 are provided at rear portions of the lower coupling portions 43, and engage with lower engagement portions of the working device U1 to hold the lower engagement portions.

The bracket 44 is a plate body serving as an attachment portion for the auxiliary prime mover 7, and is provided between the inner portions 48S of the left and right auxiliary frame portions 48. The bracket 44 includes a metal material containing iron as a main component. The bracket 44 includes a base plate portion 55, at least one side end plate portion 56, at least one support shaft portion 57, at least one motor support frame portion 58, and a shaft connection portion 59.

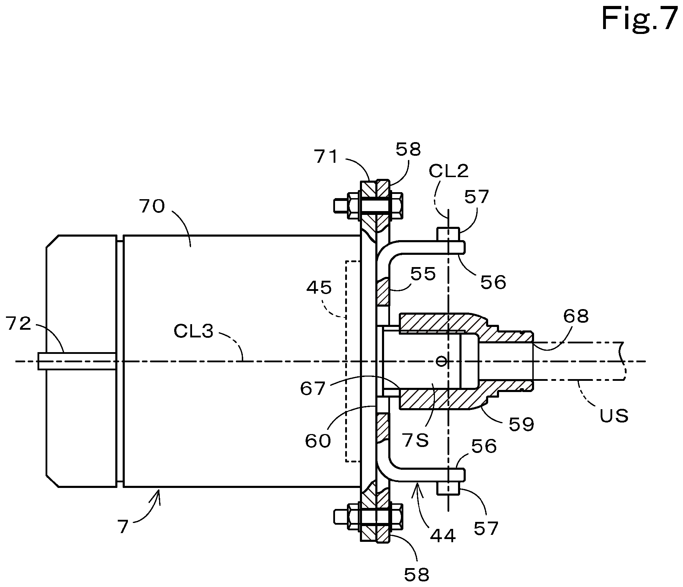

As depicted in FIGS. 6 and 7, the base plate portion 55 includes a through-hole 60. The through-hole 60 is provided at the center of the base plate portion 55 between the left and right. The shaft connection portion 59 is inserted into the through-hole 60 from the front side (the far side of the through-hole 60 as viewed from the rear side of the vehicle body 2).

The side end plate portions 56 are bent rearward at left and right end portions, respectively, of the base plate portion 55. The support shaft portions 57 protrude outward in the left-right direction from the outer surfaces of the side end plate portions 56 in the left-right direction, and are pivotally supported by the inner portions 48S of the auxiliary frame portions 48 of the frame body 41. In this manner, the bracket 44 is supported on the frame body 41 so as to be rotatable with the left and right support shaft portions 57 being fulcrums.

The motor support frame portions 58 extend outward in the left-right direction from the base plate portion 55. The auxiliary prime mover 7 is fixed to the left and right motor support frame portions 58. The shaft connection portion 59 is a shaft joint including a first connection portion 67 and a second connection portion 68. The first connection portion 67 is coupled to and held on the drive shaft 7S of the auxiliary prime mover 7 in a rotation-prevented state. On the other hand, the second connection portion 68 has a hole shape into which the driven shaft US of the working device U1 can be fitted in a rotation-prevented state, and transmits power to the driven shaft US in a fitted state. Accordingly, when the drive shaft 7S of the auxiliary prime mover 7 is rotationally driven, the driven shaft US of the working device U1 is also rotationally driven in accordance therewith. In this manner, the drive shaft 7S of the auxiliary prime mover 7 is directly coupled to the driven shaft US of the working device U1 so as to be capable of transmitting power thereto.

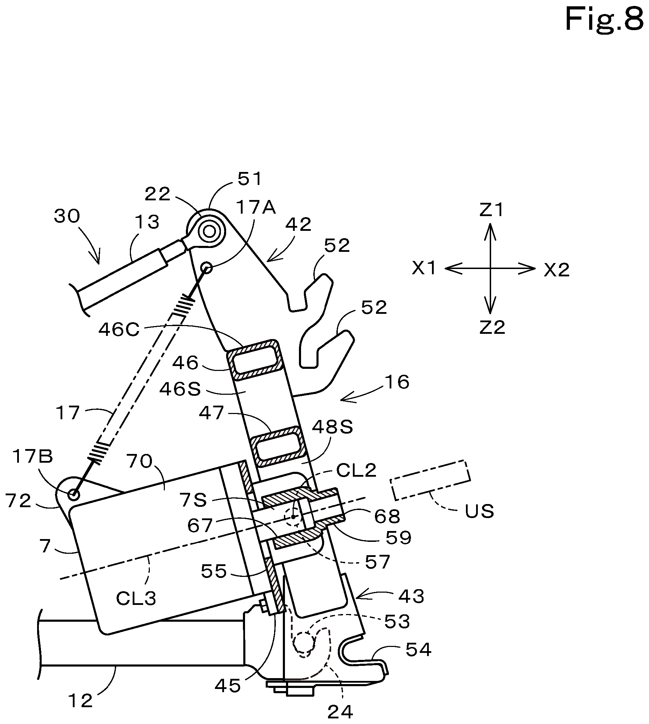

As described above, the auxiliary prime mover 7 is an electric motor driven by being supplied with electric power from the vehicle body 2. As depicted in FIGS. 7 and 8, the auxiliary prime mover 7 includes a housing 70 and the drive shaft 7S. The auxiliary prime mover 7 may be a gasoline engine or a hydraulic motor as long as it is small and lightweight.

The housing 70 includes a metal material containing iron as a main component. The housing 70 includes an attachment frame portion 71 and a suspended portion 72. The housing 70 has a substantially cylindrical shape, and rotatably holds the drive shaft 7S therein. The attachment frame portion 71 is provided at a first end portion of the housing 70, and is fixed by bolts or the like while being made to face the base plate portion 55 of the bracket 44. That is, the housing 70 is closely coupled to the bracket 44. The drive shaft 7S protrudes from the attachment frame portion 71.

As described above, the auxiliary prime mover 7 is swingably supported on the frame body 41. Thus, an angle when the driven shaft US of the working device U1 is coupled to the drive shaft 7S of the auxiliary prime mover 7 can be adjusted to any angle. The attachment frame portion 71 may be provided separately from the housing 70, or may be integrated with the housing 70.

The suspended portion 72 is provided at an upper portion of the outer periphery of the housing 70 as a coupling portion to which the suspender 17 is coupled to be held. The suspended portion 72 of the first example embodiment is provided at an upper portion of the outer periphery of an end portion of the housing 70 on the opposite side from the attachment frame portion 71. The suspended portion 72 may be provided separately from the housing 70, or may be integrated with the housing 70. Details of the suspender 17 are described later.

The protective member 45 is provided along the outer side surface of the housing 70. Specifically, the protective member 45 is provided at such a position as to be in contact with both the attachment frame portion 71 of the housing 70 and the motor support frame portions 58 of the bracket 44. In the first example embodiment, the protective member 45 is provided along portions joined to the motor support frame portions 58 (around a mating surface) in an outer lower portion of the housing 70.

The protective member 45 is a member including a metal material having a larger ionization tendency than a base material of the bracket 44, that is, a metal material containing a sacrificial anode material as a main component. For example, in the first example embodiment, while the bracket 44 includes a metal material containing iron as a main component, the protective member 45 includes a metal material containing zinc or aluminum as a main component.

The protective member 45 is removably mounted on the bracket 44 by bolts or the like. Accordingly, when sacrificial corrosion of the protective member 45 has progressed, the protective member 45 can be appropriately replaced with a new protective member 45. The protective member 45 may be removably mounted on the housing 70 or may be removably mounted on another portion as long as the protective member 45 is provided at such a position as to be in contact with both the housing 70 and the bracket 44. Further, a plurality of protective members 45 may be arranged side by side in contact with the entire periphery of the joint portion between the housing 70 and the bracket 44.

As depicted in FIG. 8, the suspender 17 is coupled between the hitch frame 16 and the auxiliary prime mover 7, and swingably supports the auxiliary prime mover 7 in a suspended manner with respect to the hitch frame 16. The suspender 17 of the first example embodiment is a tension coil spring. The suspender 17 may be a compression coil spring or a leaf spring as long as the suspender 17 allows the auxiliary prime mover 7 to be supported in a suspended manner with a stable orientation with respect to the hitch frame 16. Alternatively, the suspender 17 may be an air damper or a hydraulic damper.

The suspender 17 includes a first end portion 17A and a second end portion 17B. The first end portion 17A is coupled to the rear portion of the upper coupling portion 42 of the hitch frame 16. On the other hand, the second end portion 17B is coupled to the suspended portion 72 provided at the upper portion of the outer periphery of the housing 70 of the auxiliary prime mover 7. That is, the second end portion 17B is coupled to a position on the upper portion of the outer periphery of the housing 70, separated from a swing center CL2 of the bracket 44 in the direction of an axial line CL3 of the drive shaft 7S. Accordingly, the auxiliary prime mover 7 is supported at three different points including the swing center CL2 of the bracket 44, the position separated from the swing center CL2 in the direction of the axial line CL3 of the drive shaft 7S, and the upper coupling portion 42 of the hitch frame 16 (three points located at the respective vertices of a virtual triangle).

The suspender 17 elastically expands and contracts in directions away from or toward each other between the first end portion 17A and the second end portion 17B. Accordingly, when an external force in a swinging direction is applied to the auxiliary prime mover 7 due to its own weight, vibration during traveling, or the like, the suspender 17 applies, to the auxiliary prime mover 7, a tensile force resisting the external force (a restoring force against expansion). Thus, the auxiliary prime mover 7 is held in a stable suspended orientation with respect to the hitch frame 16, and the load applied to the coupling portion between the drive shaft 7S of the auxiliary prime mover 7 and the driven shaft US of the working device U1 is also absorbed.

### Variations

In the working vehicle 1 of the above-described first example embodiment, the drive shaft 7S of the auxiliary prime mover 7 is coupled to the driven shaft US of the working device U1 through a coupling 66. However, a configuration in which the driven shaft US can be directly coupled to the drive shaft 7S of the auxiliary prime mover 7 may be used.

Specifically, the drive shaft 7S of the auxiliary prime mover 7 may be a hollow shaft, and a shaft connection portion may be integrated with a tip portion thereof. On the other hand, the driven shaft US of the working device U1 is a shaft body that can be fitted into the shaft connection portion (the inside of the hollow shaft). The shaft connection portion has a hole shape into which the driven shaft US of the working device U1 can be fitted in a rotation-prevented state, and transmits power to the driven shaft US in a fitted state.

Alternatively, the driven shaft US of the working device U1 may be a hollow shaft, and a shaft connection portion may be provided at a tip portion thereof. On the other hand, the drive shaft 7S of the auxiliary prime mover 7 is a shaft body that can be fitted into the shaft connection portion (the inside of the hollow shaft). The shaft connection portion has a hole shape into which the drive shaft 7S of the auxiliary prime mover 7 can be fitted in a rotation-prevented state, and transmits power to the drive shaft 7S in a fitted state. This configuration also achieves operation and effects similar to those of the working vehicle 1 of the above-described first example embodiment.

Further, in the working vehicle 1 of the above-described first example embodiment, the coupler 6 is attached to the rear portion of the vehicle body 2. However, the coupler 6 may be attached to a front portion of the vehicle body 2. Also in this working vehicle 1, the working device U1 can be smoothly coupled to the vehicle body 2 as long as the bracket 44 is coupled to the hitch frame 16 swingably about the axial line CL2 extending in the left-right direction (width direction) of the vehicle body 2.

In the working vehicle 1 of the above-described first example embodiment, an angle when the driven shaft US of the working device U1 is coupled to the drive shaft 7S of the auxiliary prime mover 7 can be adjusted to any angle through a swing of the auxiliary prime mover 7. However, a universal joint may be provided on the drive shaft 7S of the auxiliary prime mover 7, and the angle when the drive shaft 7S is coupled to the driven shaft US may be allowed to be adjusted to any angle by the universal joint 75. Thus, the drive shaft 7S of the auxiliary prime mover 7 is indirectly coupled to the driven shaft US of the working device U1 so as to be capable of transmitting power thereto. Accordingly, operation and effects similar to those of the working vehicle 1 of the above-described first example embodiment are achieved.

### Second example embodiment

A working vehicle of a second example embodiment of the present invention is described with reference to drawings. In the following description of the second example embodiment, a straight traveling direction of the working vehicle (a direction in which the working vehicle moves straight forward or rearward) is referred to as the front-rear direction. The forward movement side in the front-rear direction is referred to as the front side, and the rearward movement side in the front-rear direction is referred to as the rear side. In association therewith, a direction corresponding to the vehicle width of the working vehicle that is orthogonal to the front-rear direction and the up-down direction is referred to as the lateral direction. Further, based on a center line extending in the front-rear direction of the working vehicle, the right side in the lateral direction as viewed from the rear side toward the front side is referred to as one side or the right in the lateral direction, and the left side in the lateral direction as viewed from the rear side toward the front side is referred to as the other side or the left in the lateral direction.

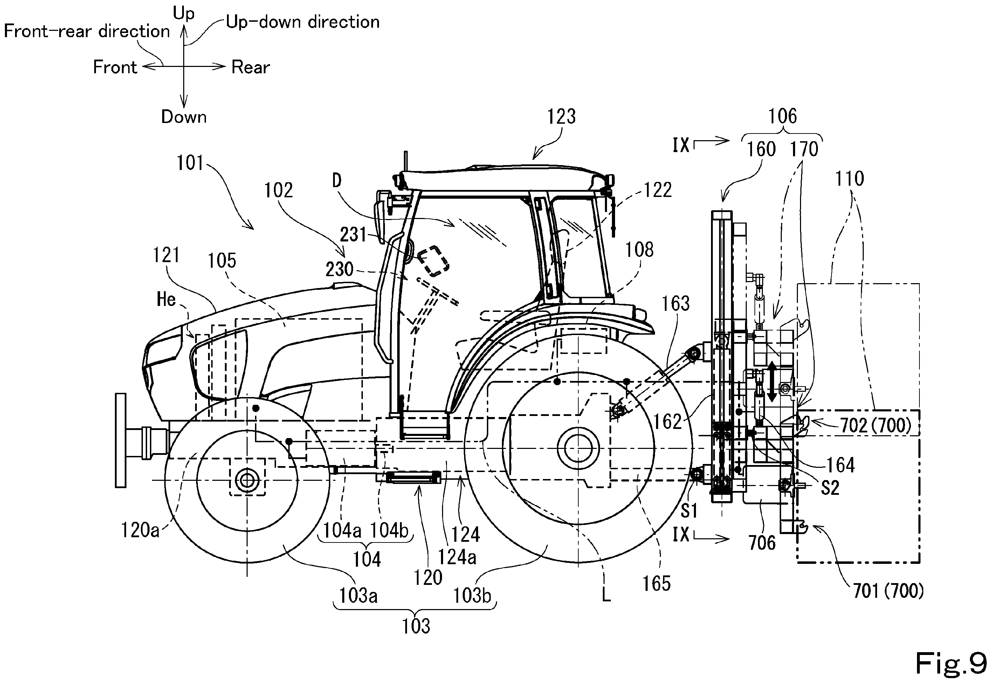

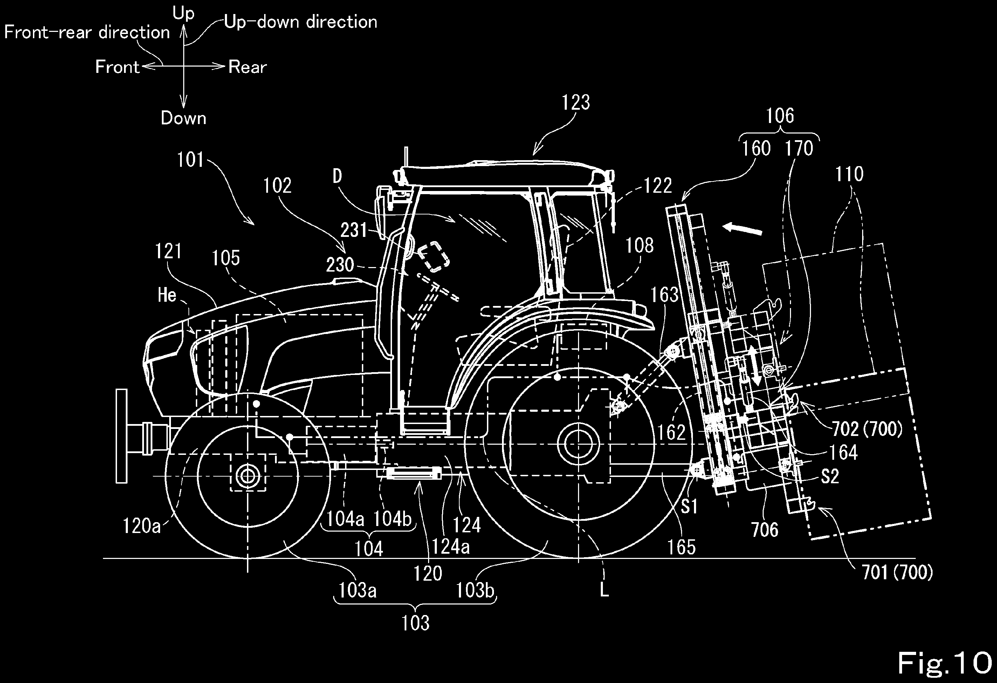

The working vehicle of the second example embodiment is an electrically driven working vehicle that causes a working device to perform predetermined work while traveling by driving an electric motor through power feed from a driving battery. As depicted in FIGS. 9 and 10, a working device 110 that performs predetermined work at a work site is coupled to a working vehicle 101.

The working device 110 is coupled to the working vehicle 101 while being located on the front side or the rear side (in FIGS. 9 and 10, the rear side) of the working vehicle 101. In the second example embodiment, the working vehicle 101 is an agricultural working vehicle (a so-called tractor) used in an agricultural field that is a work site. In FIGS. 9 and 10, the working device 110 is schematically depicted by virtual lines. Examples of the working device 110 coupled to the working vehicle 101 include a rotary (cultivator) that cultivates soil in an agricultural field, a plow that turns over soil in an agricultural field, a soiler that crushes lumps of soil in an agricultural field, a harrow, a levee plasterer that performs levee plastering, a seeder that sows seeds in an agricultural field, a ridger that makes ridges, a broadcaster that spreads a fertilizer or soil conditioner, a mulcher that performs mulching on ridges, a cultivator that performs weeding or the like between ridges, a flail mower that performs mowing, and a harvester (digger) that digs up crops in soil of an agricultural field. The working device 110 coupled to the working vehicle 101 is replaced (changed) with another working device 110 according to the content (purpose) of work at a work site.

In association therewith, the working vehicle 101 includes a coupler 106 for coupling the working device 110. That is, the working vehicle 101 includes a vehicle body 102 to travel and the coupler 106 to be attached to the vehicle body 102.

Specifically, the working vehicle 101 includes the vehicle body 102, a traveling device 103 that supports the vehicle body 102 such that the vehicle body 102 is allowed to travel, a traveling electric motor 104 that drives the traveling device 103, a driving battery 105 that is directly or indirectly supported by the vehicle body 102 and is configured to supply electric power to the traveling electric motor 104, and the coupler 106 that is attached to the vehicle body 102 and couples the working device 110 to the vehicle body 102. Further, the working vehicle 101 of the second example embodiment includes a controller 108 that performs power feed control of the driving battery 105.

The vehicle body 102 includes a vehicle body frame 120 that extends in the front-rear direction and supports the driving battery 105. Further, the vehicle body 102 includes a hood 121 that covers equipment on the vehicle body frame 120 from above and from lateral sides. The hood 121 covers equipment located in a front-side half region or substantially half region of the vehicle body frame 120 in the front-rear direction. The working vehicle 101 is a riding type vehicle, and includes an operator's seat 122 located rearward of the hood 121. Further, the working vehicle 101 includes a protective structure 123 that protects the operator's seat 122.

The vehicle body 102 includes a driving transmitter 124 that transmits driving of the traveling electric motor 104 to the traveling device 103. The driving transmitter 124 includes a transmission mechanism that transmits output (rotational force) of the traveling electric motor 104 to rear wheels 103b (a pair of rear wheels 103b), which are described later, of the traveling device 103, and a casing 124a that houses the transmission mechanism. The transmission mechanism includes a clutch mechanism, a gear mechanism, and the like connected to an output shaft of the traveling electric motor 104. The transmission mechanism distributes and transmits the output of the traveling electric motor 104 to the pair of rear wheels 103b. In the second example embodiment, the casing 124a of the driving transmitter 124 is also used as part of the vehicle body frame 120.

Specifically, the vehicle body frame 120 includes a front frame 120a located on the front side in the front-rear direction and the casing 124a of the driving transmitter 124. That is, the vehicle body frame 120 includes the front frame 120a as a structural body and the casing 124a that houses the transmission mechanism of the driving transmitter 124 and is directly or indirectly coupled to the front frame 120a.

The front frame 120a supports the driving battery 105. That is, the driving battery 105 is fixed to the front frame 120a in a non-removable manner while being located on the front frame 120a. The driving battery 105 is located in the hood 121. That is, the hood 121 is opposed to the driving battery 105 in the lateral direction and the up-down direction, and covers the driving battery 105.

The traveling electric motor 104 is located in the front frame 120a. That is, the traveling electric motor 104 is firmly fixed to the front frame 120a. In the second example embodiment, an output shaft 104b of the traveling electric motor 104 protrudes rearward in the front-rear direction. Specifically, the traveling electric motor 104 includes a motor case 104a that houses a rotor and the output shaft 104b that is connected to the rotor and protrudes outward from the motor case 104a. In the traveling electric motor 104, the motor case 104a is located on the front side in the front-rear direction, and the output shaft 104b is located on the rear side in the front-rear direction relative to the motor case 104a. The output shaft 104b of the traveling electric motor 104 includes an axis extending in the front-rear direction. The transmission mechanism of the driving transmitter 124 is coupled to the output shaft 104b of the traveling electric motor 104. Thus, the driving transmitter 124 is located rearward of the traveling electric motor 104. In the second example embodiment, the casing 124a of the driving transmitter 124 is coupled to the traveling electric motor 104. Thus, the driving transmitter 124 is indirectly coupled to the front frame 120a through the traveling electric motor 104, and is located rearward of the front frame 120a.

In the second example embodiment, the traveling electric motor 104 is located below the driving battery 105. The front frame 120a supports, in addition to the driving battery 105, pieces of equipment such as the traveling electric motor 104 and a radiator He that cools the driving battery 105. These pieces of equipment such as the radiator He are located forward of the driving battery 105, and are located in the hood 121 together with the driving battery 105. Thus, the traveling electric motor 104 and the driving battery 105 are located in the front-side half region or substantially half region of the vehicle body frame 120 in the front-rear direction.

The protective structure 123 of the second example embodiment is a so-called cabin that covers the operator's seat 122 and defines an operator's cab D. Various kinds of equipment (a manual operator 230 such as a steering wheel and an operation lever, a display 231, and the like) are located in the operator's cab D (inside the protective structure 123). The operator's seat 122 and the protective structure 123 are located above the vehicle body frame 120, and are supported by the vehicle body frame 120.

Specifically, the operator's seat 122 and the protective structure 123 are located above the casing 124a of the driving transmitter 124 in the vehicle body frame 120, and are fixed to the casing 124a. Thus, the operator's seat 122 and the protective structure 123 are located over a rear-side half region or substantially half region of the vehicle body frame 120 in the front-rear direction. Pieces of equipment such as the manual operator 230 and the display 231 are located in front of the operator's seat 122 so that a worker seated on the operator's seat 122 can perform operation and the like. The pieces of equipment such as the manual operator 230 and the display 231 located in the operator's cab D are also located over the rear-side half region or substantially half region of the vehicle body frame 120 in the front-rear direction.

As the traveling device 103, a crawler-type traveling device or a tire-type traveling device is used. In the second example embodiment, a tire-type traveling device is used as the traveling device 103. Specifically, the traveling device 103 includes at least one front wheel 103a and the rear wheels 103b arranged with a spacing therebetween in the front-rear direction. A pair of front wheels 103a and the pair of rear wheels 103b are arranged with a spacing between each pair in the lateral direction (vehicle width direction). That is, the traveling device 103 includes the pair of front wheels 103a arranged with the vehicle body 102 interposed therebetween in the lateral direction and the pair of rear wheels 103b that are located on the rear side in the front-rear direction relative to the pair of front wheels 103a and are arranged with the vehicle body 102 interposed therebetween in the lateral direction. In the working vehicle 101 of the second example embodiment, each of the pair of front wheels 103a is a steered wheel operated by the manual operator 230 (steering wheel), and each of the pair of rear wheels 103b is a drive wheel driven by the traveling electric motor 104. The traveling device 103 of the working vehicle 101 may be a so-called four-wheel drive (4WD) configuration in which the pair of front wheels 103a are driven together with the pair of rear wheels 103b while the pair of front wheels 103a are used as steered wheels.

The driving battery 105 is located in the vehicle body 102. The driving battery 105 is a chargeable/dischargeable secondary battery. In the second example embodiment, the driving battery 105 is a lithium ion battery. Specifically, the driving battery 105 is a battery pack in which a plurality of battery cells are combined, and is capable of power feed with a high capacity. The driving battery 105 is connected to the traveling electric motor 104 through a power line L so as to supply electric power thereto.

In the second example embodiment, the driving battery 105 is also connected through the power line L to pieces of electrical equipment 706, 162, 163, and 164 mounted in the coupler 106 (in the second example embodiment, a device electric motor 706, a first actuator 162, a second actuator 163, and a third actuator 164, which are described later) so as to supply electric power thereto. The power line L is provided with an electric circuit switch that opens and closes an electric circuit in accordance with an instruction from the controller 108.

Thus, based on the instruction from the controller 108, supply of electric power to the pieces of electrical equipment 706, 162, 163, and 164 mounted in the coupler 106 (in the second example embodiment, the device electric motor 706, the first actuator 162, the second actuator 163, and the third actuator 164, which are described later) and stop of the supply are performed.

The coupler 106 is attached to the vehicle body 102. The coupler 106 of the second example embodiment is attached to the vehicle body frame 120 of the vehicle body 102. Specifically, the coupler 106 is attached to at least one of the front end or the rear end of the vehicle body frame 120. In association therewith, the working device 110 coupled to the coupler 106 is located on at least one of the front side or the rear side of the vehicle body 102 in the front-rear direction. In the second example embodiment, the coupler 106 is attached to the rear end of the vehicle body frame 120. In association therewith, the working device 110 is located rearward of the vehicle body 102 in the front-rear direction.

The coupler 106 includes a first unit 160 directly or indirectly supported by the vehicle body 102 and a second unit 170 including a coupling portion 700 to which the working device 110 that performs predetermined work can be coupled.

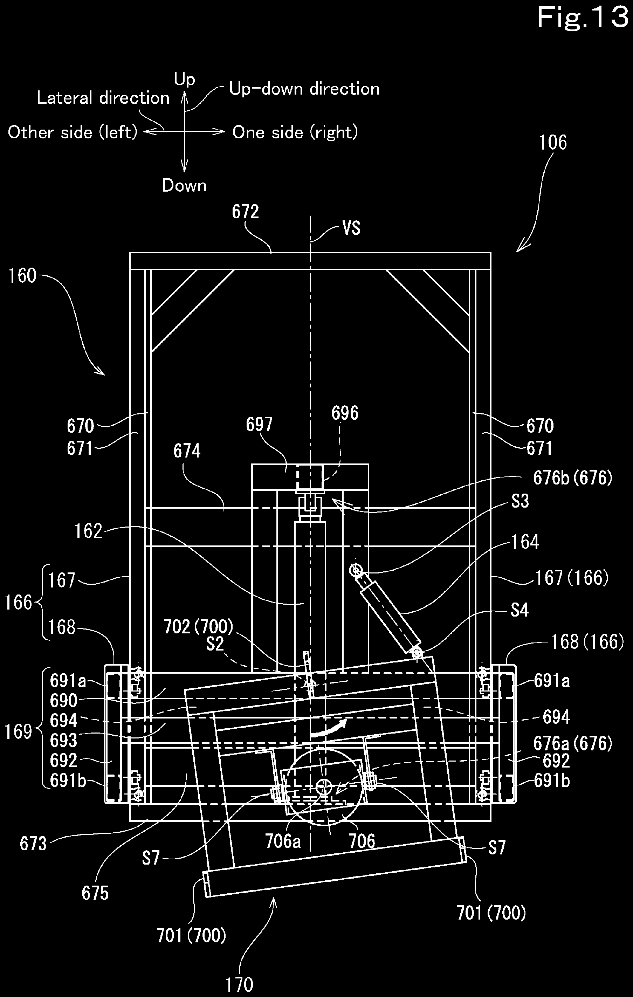

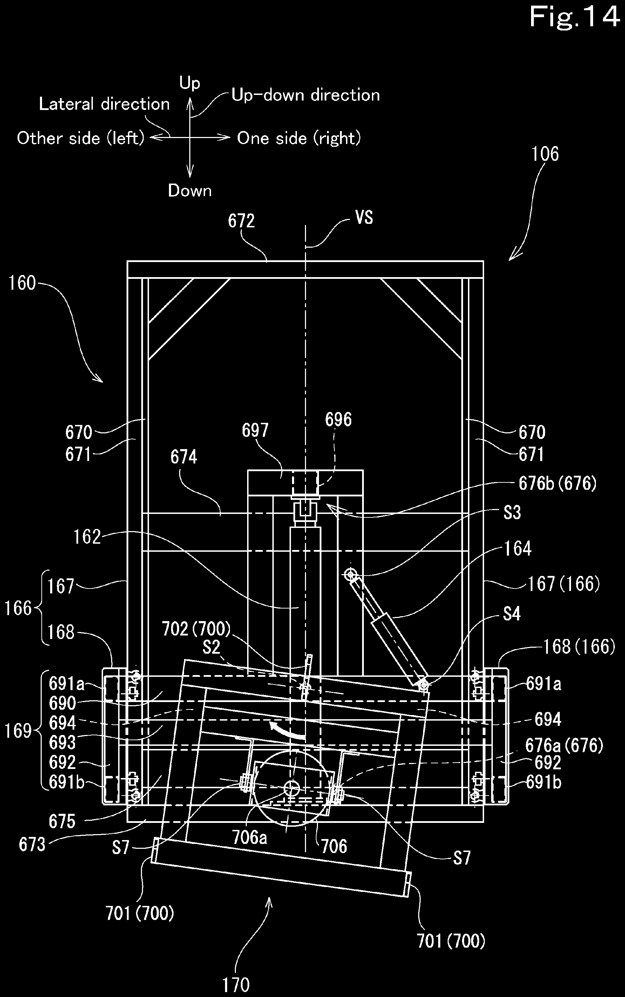

As depicted in FIG. 9, the first unit 160 supports the second unit 170 linearly movably at least in the up-down direction among linear directions orthogonal to the lateral direction. In the second example embodiment, as depicted in FIG. 10, the first unit 160 is rotatable about at least one shaft (hereinafter, referred to as a first lateral shaft) S1 extending in the lateral direction. Further, in the coupler 106 of the second example embodiment, the second unit 170 is movable in a linear direction orthogonal to the lateral direction, and is rotatable about a longitudinal shaft S2 extending in the front-rear direction (see FIGS. 13 and 14). That is, the coupler 106 is switchable between a first state in which the second unit 170 is linearly movable in the up-down direction (vertical direction) and a second state in which the second unit 170 is linearly movable in an inclined direction inclined with respect to the up-down direction. The second state is not limited to a state in which the linear movement direction of the second unit 170 is inclined at a fixed angle with respect to the vertical direction, and includes a state in which the linear movement direction of the second unit 170 is inclined at a fixed angle or any angle (an angle within a movable range) with respect to the vertical direction by operation of the manual operator 230. Accordingly, when the coupler 106 in the first state starts rotating the first unit 160 about at least one first lateral shaft S1, the coupler 106 enters a state resulting from switching from the first state to the second state.

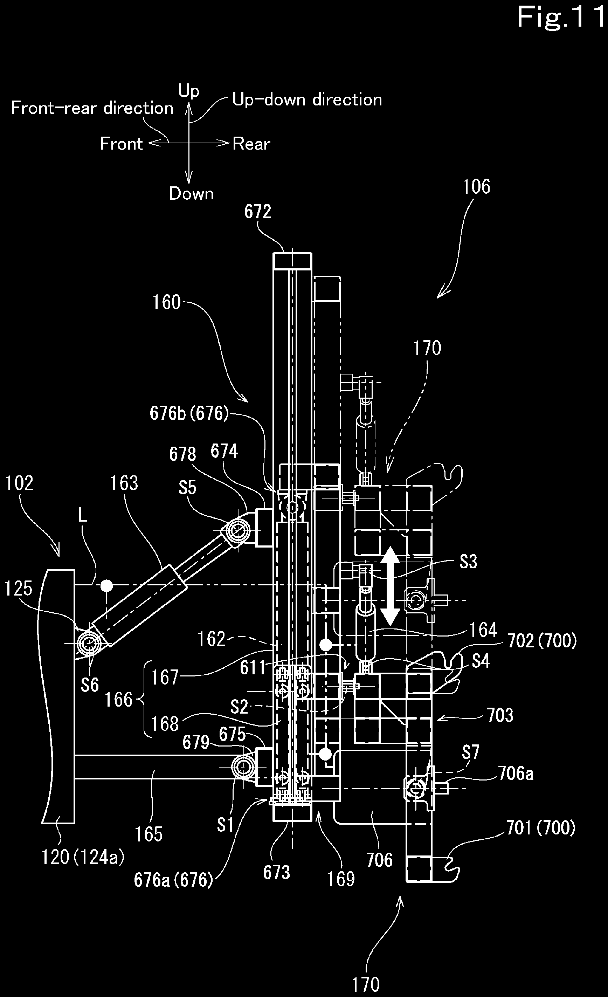

In association therewith, the coupler 106 includes the plurality of actuators 162, 163, and 164 as depicted in FIGS. 11 to 14. Specifically, the coupler 106 includes the first actuator 162 that linearly moves the second unit 170 in a linear direction orthogonal to the lateral direction. Further, the coupler 106 includes the second actuator 163 that rotates the first unit 160 about at least one first lateral shaft S1 (see FIG. 11). Further, the coupler 106 of the second example embodiment includes the third actuator 164 that rotates the second unit 170 about the longitudinal shaft S2. Further, the coupler 106 includes at least one arm 165 that includes a base end portion coupled to the vehicle body 102 and a tip portion opposite the base end portion and extends outward from the vehicle body 102 (vehicle body frame 120) in a direction orthogonal to the up-down direction (see FIGS. 9 to 11).

In the second example embodiment, the first unit 160 includes a guide device 166 that can guide the second unit 170 at least in the up-down direction among linear directions orthogonal to the lateral direction (see FIGS. 9 and 11).

The guide device 166 includes at least one guide body 167 extending in a linear direction orthogonal to the lateral direction and at least one guided body 168 that is guided by at least one guide body 167 and to which the second unit 170 is directly or indirectly coupled.

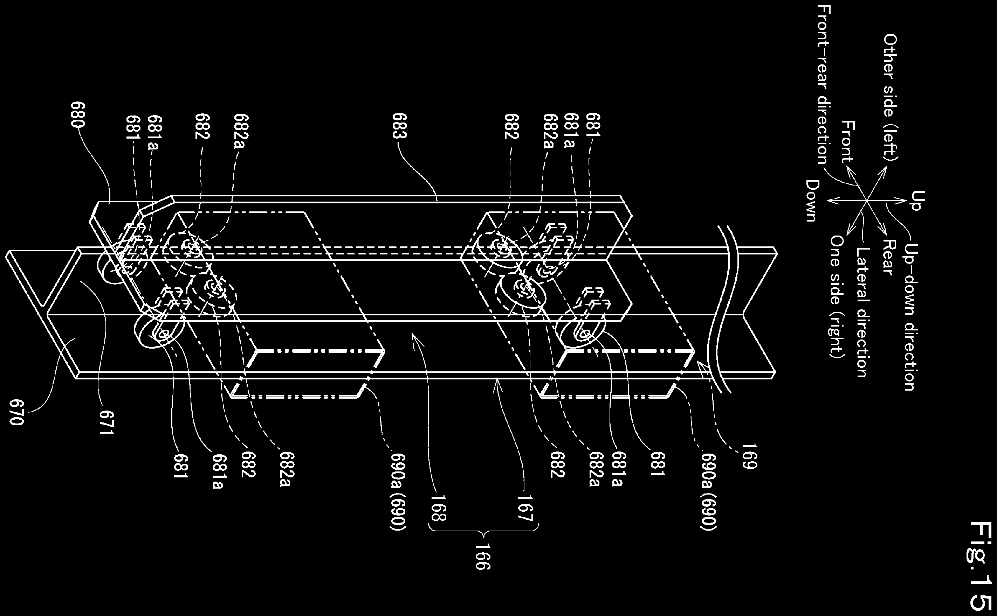

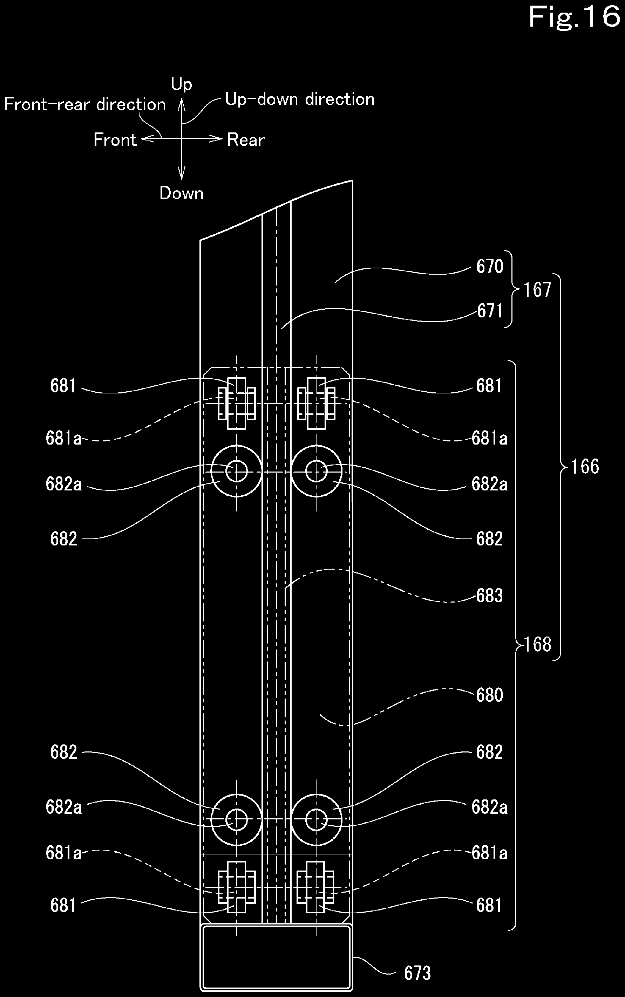

At least one guide body 167 is a so-called rail, and extends straight in a linear direction orthogonal to the lateral direction, and guides at least one guided body 168 in the linear direction. In conjunction therewith, in the following description, the direction in which at least one guide body 167 extends (the linear direction in which at least one guided body 168 is guided) is referred to as a guide direction. As depicted in FIGS. 15 and 16, in the second example embodiment, the cross-sectional shape of at least one guide body 167 as viewed from the guide direction is a T-shape. That is, at least one guide body 167 is a T-shaped steel member. Specifically, at least one guide body 167 includes a base portion 670 that is elongated in one direction and has a strip shape and a protruding portion 671 projecting in a direction orthogonal to a surface of the base portion 670 over the entire length in the longitudinal direction of the base portion 670 at a central portion of one surface of the base portion 670 in the width direction orthogonal to the longitudinal direction. In the second example embodiment, the one surface of the base portion 670 and both surfaces of the protruding portion 671 are guide surfaces that guide the guided body 168.

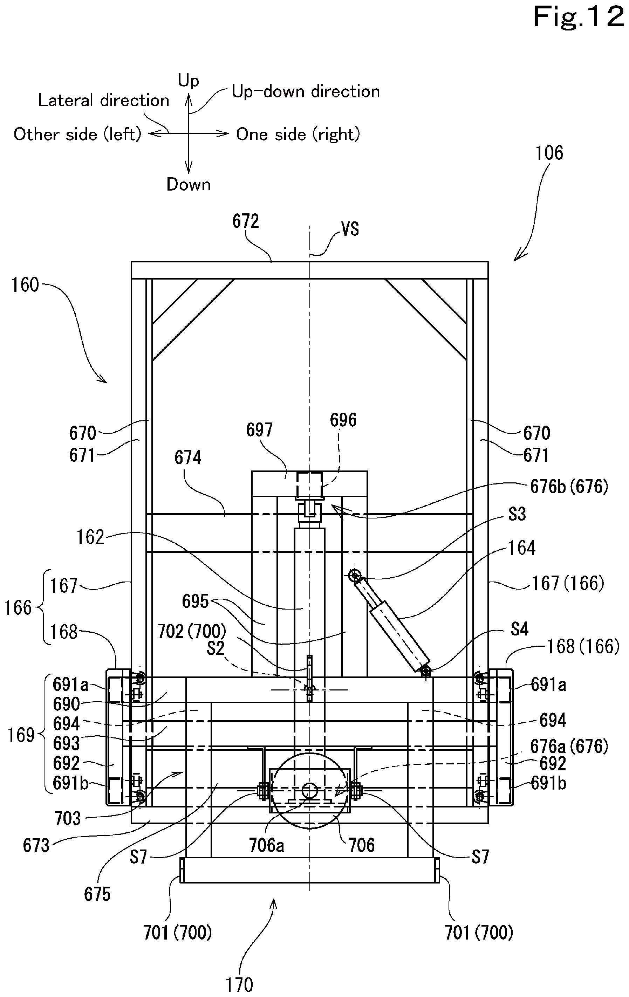

In the second example embodiment, the guide device 166 includes a pair of (two) guide bodies 167 including the above-described configuration as depicted in FIGS. 12 to 14. In association therewith, the guide device 166 includes a pair of (two) guided bodies 168 guided by the respective guide bodies 167. The pair of guide bodies 167 are arranged in parallel or substantially in parallel with each other with a spacing therebetween in the lateral direction. In the second example embodiment, the pair of guide bodies 167 are symmetrically (plane-symmetrically) arranged based on a virtual plane VS along a center line of the vehicle body frame 120 that extends in the front-rear direction. The pair of guide bodies 167 are arranged in a state in which the base portions 670 thereof are opposed to each other, and the respective protruding portions 671 protrude outward in the lateral direction from the base portions 670.

As depicted in FIGS. 15 and 16, the guided bodies 168 each include a base plate 680 that has a flat plate shape and is located opposite to the base portion 670 of the guide body 167 and at least one first guide roller 681 that is located on one surface side of the base plate 680 and is supported by the base plate 680. At least one first guide roller 681 is rotatable about a first roller shaft 681a extending in a direction orthogonal to the guide direction in parallel or substantially in parallel with the base plate 680. The guided bodies 168 each also include at least one second guide roller 682 that is located on the one surface side of the base plate 680 and is supported by the base plate 680. At least one second guide roller 682 is rotatable about a second roller shaft 682a extending in a direction orthogonal to the base plate 680.

At least one first guide roller 681 abuts against one surface (a guide surface) of the base portion 670 of the guide body 167, and rolls on the one surface (guide surface). At least one second guide roller 682 abuts against one of both surfaces (a guide surface) of the protruding portion 671 of the guide body 167, and rolls on the one surface (guide surface). In each of the guided bodies 168 of the second example embodiment, the first guide rollers 681 and the second guide rollers 682 are located on both sides of the protruding portion 671 of the guide body 167. That is, the guided bodies 168 each include at least one pair of first guide rollers 681 located on both sides of the protruding portion 671 of the guide body 167 and at least one pair of second guide rollers 682 that are located on both sides of the protruding portion 671 of the guide body 167 and sandwich the protruding portion 671 therebetween.

Thus, the guided bodies 168 are each guided in the direction in which the protruding portion 671 extends (the longitudinal direction of the protruding portion 671) in a state in which movement in the direction orthogonal to the surface of the base portion 670 of the guide body 167 (toward the base portion 670 side) and movement in the direction orthogonal to the surface of the protruding portion 671 of the guide body 167 are restricted. That is, the guided bodies 168 are each guided with the guide direction being the direction orthogonal to the first roller shafts 681a of the first guide rollers 681 and the second roller shafts 682a of the second guide rollers 682.

The guided bodies 168 of the second example embodiment each include two sets of the pair of first guide rollers 681 (two pairs thereof) and two sets of the pair of second guide rollers 682 (two pairs thereof). The two sets of the pair of first guide rollers 681 and the two sets of the pair of second guide rollers 682 are arranged with a spacing therebetween in the guide direction, and are supported by the base plate 680. Thus, tilting (falling) of each of the guided bodies 168 about an axial line orthogonal to the base portion 670 of the guide body 167 is also prevented.

In the second example embodiment, the first roller shafts 681a are supported by flange portions projecting from the base plate 680, and the second roller shafts 682a project from the one surface of the base plate 680. Further, in each of the guided bodies 168 of the second example embodiment, a reinforcing rib 683 projects from the other surface of the base plate 680 while extending in the guide direction.

In association with the arrangement of the pair of guide bodies 167 with a spacing therebetween in the lateral direction in the above-described manner, the first unit 160 includes coupling frames 672 and 673 that couple the pair of guide bodies 167 as depicted in FIGS. 11 to 14. In the second example embodiment, the first unit 160 includes, as the coupling frames 672 and 673, the first coupling frame 672 that couples one end and one end (the upper ends) of the pair of guide bodies 167 to each other and the second coupling frame 673 that couples the other end and the other end (the lower ends) of the pair of guide bodies 167 to each other.

In the second example embodiment, the first coupling frame 672 and the second coupling frame 673 include square steel pipes. Each of the first coupling frame 672 and the second coupling frame 673 extends straight in the lateral direction. Thus, the pair of guide bodies 167, the first coupling frame 672, and the second coupling frame 673 integrally define a rectangular frame body. In the second example embodiment, the pair of guide bodies 167 are arranged such that one edge of each of the base portions 670 in the short-side direction (a direction orthogonal to the longitudinal direction) is oriented toward the vehicle body 102 side (the front side in the front-rear direction).

On the premise of this configuration, the first unit 160 of the second example embodiment includes, as coupling frames 674 and 675, the third coupling frame 674 that couples the one edge and the one edge of the base portions 670 in the short-side direction located at intermediate portions of the pair of guide bodies 167 in the longitudinal direction to each other and the fourth coupling frame 675 that couples the one edge and the one edge of the base portions 670 in the short-side direction located on the other end side of the pair of guide bodies 167 in the longitudinal direction to each other. In the second example embodiment, the third coupling frame 674 and the fourth coupling frame 675 also include square steel pipes. Each of the third coupling frame 674 and the fourth coupling frame 675 extends straight in the lateral direction.

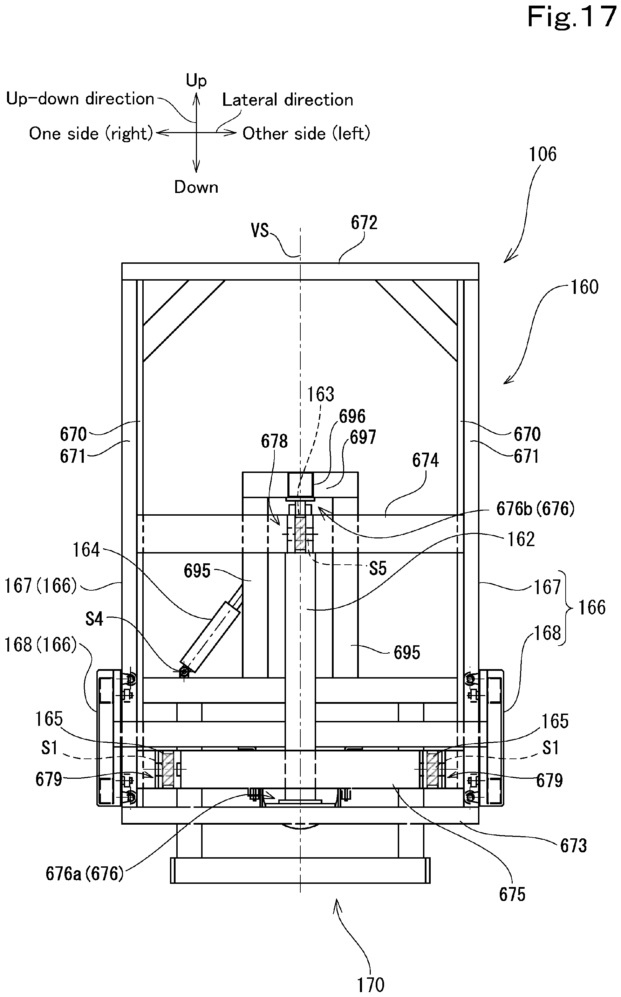

As depicted in FIG. 17, a first bracket portion 678 for coupling the second actuator 163 is provided at a central portion of the third coupling frame 674 in the lateral direction. Further, the fourth coupling frame 675 is provided with a pair of second bracket portions 679 that are for coupling to a tip portion of at least one arm 165 and are arranged with a spacing therebetween in the lateral direction. The first bracket portion 678 protrudes forward in the front-rear direction from the third coupling frame 674, and is located so as to overlap, in the lateral direction, one end portion (in the second example embodiment, the rod end) of the second actuator 163 that is a cylinder device. The pair of second bracket portions 679 protrude forward in the front-rear direction from the fourth coupling frame 675. The arrangement and the lateral-direction spacing of the pair of second bracket portions 679 are set according to the arrangement and the spacing of a pair of arms 165 (the tip portions). That is, the second bracket portions 679 are located so as to overlap, in the lateral direction, the tip portions of the arms 165 extending from the vehicle body frame 120. In the second example embodiment, the second bracket portions 679 are coupled to the tip portions of the arms 165 through the first lateral shafts S1, and are coupled to the arms 165 rotatably about the first lateral shafts S1.

The first bracket portion 678 and the second bracket portions 679 may each be a bracket including a single plate member. However, in the second example embodiment, each of them includes a pair of brackets that include plate members and are arranged so as to sandwich a coupling target (the second actuator 163 in the case of the first bracket portion 678 or the arm 165 in the case of the second bracket portion 679) from the lateral direction.

As depicted in FIGS. 11 to 14, the first unit 160 includes an attachment frame 169 to which the second unit 170 is attached. Further, the first unit 160 includes an actuator coupling portion 676 to which the first actuator 162 is coupled.

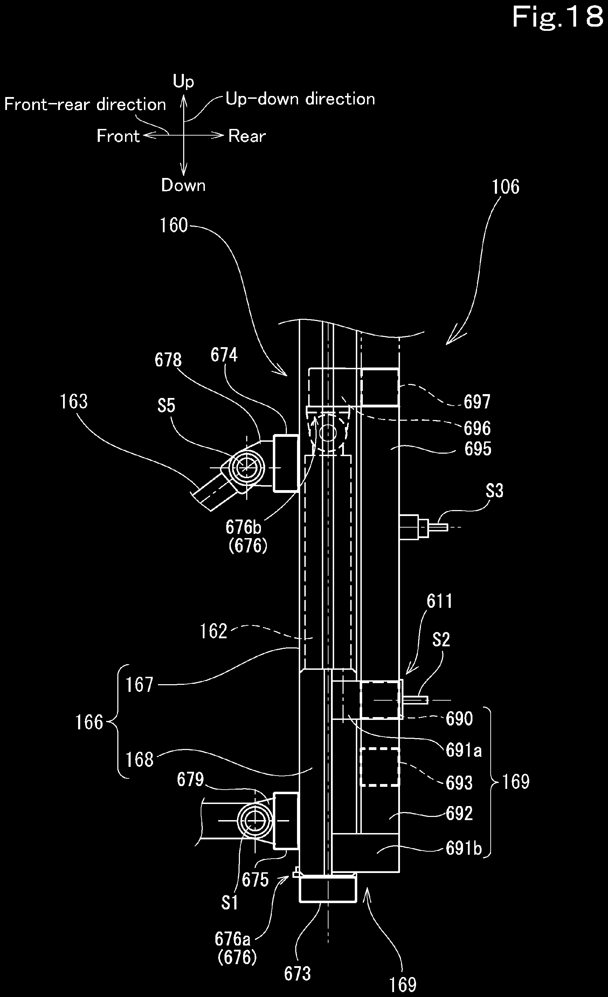

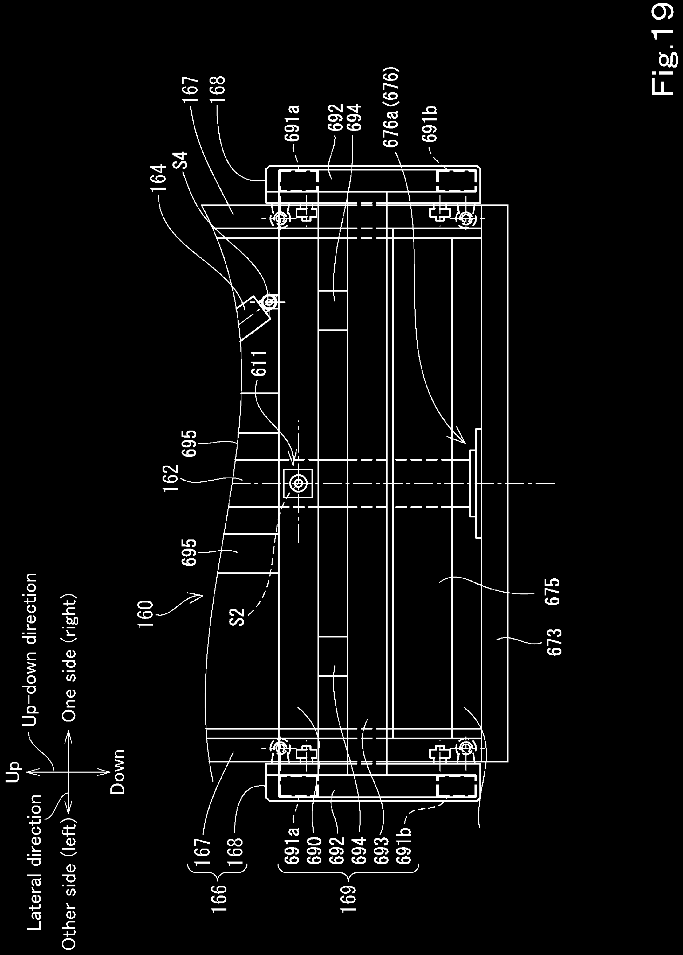

The attachment frame 169 is coupled to the guided bodies 168. Thus, the attachment frame 169 permits movement of the second unit 170 coupled to the attachment frame 169 in the guide direction. In the second example embodiment, because the guided bodies 168 are each attached to a respective one of the pair of guide bodies 167 arranged with a spacing therebetween in the lateral direction, the pair of guided bodies 168 are also arranged with a spacing therebetween in the lateral direction. In association therewith, as depicted in FIGS. 18 and 19, the attachment frame 169 is positioned to connect between the pair of guided bodies 168, and couples the pair of guided bodies 168. Specifically, the attachment frame 169 includes a lateral beam portion (hereinafter, referred to as a first lateral beam portion) 690 extending in the lateral direction, and couples the pair of guided bodies 168 through the first lateral beam portion 690.

More specifically, the attachment frame 169 includes a pair of arm portions (hereinafter, referred to as first arm portions) 691a that are each coupled to a respective one of the pair of guided bodies 168 and extend rearward of the guide bodies 167 in the front-rear direction from the coupled guided portions. The attachment frame 169 also includes the first lateral beam portion 690 that extends in the lateral direction and couples the pair of first arm portions 691a.

In the second example embodiment, in addition to the above-described configuration, the attachment frame 169 includes a pair of arm portions (hereinafter, referred to as second arm portions) 691b that are each coupled to a respective one of the pair of guided bodies 168 at a position below a respective one of the pair of first arm portions 691a and extend rearward of the guide bodies 167 in the front-rear direction from the coupled guided portions. The attachment frame 169 also includes a pair of coupling columns 692 that extend in the up-down direction and each connect the first arm portion 691a and the second arm portion 691b vertically arranged and a lateral beam portion (hereinafter, referred to as a second lateral beam portion) 693 that extends in the lateral direction and couples the pair of coupling columns 692.

Further, the attachment frame 169 of the second example embodiment includes a plurality of (in the second example embodiment, two) auxiliary columns 694 that are arranged with a spacing therebetween in the lateral direction and couple the first lateral beam portion 690 and the second lateral beam portion 693, and the rigidity of the attachment frame 169 is increased. The attachment frame 169 has a U-shape in plan view, and the first lateral beam portion 690 and the second lateral beam portion 693 couple the pair of first arm portions 691a and the pair of second arm portions 691b at such positions as to avoid the guide bodies 167. That is, the first lateral beam portion 690 and the second lateral beam portion 693 are located rearward of the pair of guide bodies 167 in the front-rear direction. In the second example embodiment, each of the first lateral beam portion 690, the first arm portions 691a, the second arm portions 691b, the coupling columns 692, and the second lateral beam portion 693 is a square steel pipe, and is connected by welding.

The first unit 160 includes a connection portion 611 to which the second unit 170 is connected. The connection portion 611 includes the longitudinal shaft S2 extending in the front-rear direction. In the second example embodiment, the connection portion 611 is provided on the attachment frame 169, and the longitudinal shaft S2 protrudes rearward from the attachment frame 169. Specifically, the connection portion 611 is provided on the surface of the first lateral beam portion 690 that faces rearward. In association therewith, the longitudinal shaft S2 protrudes rearward from the first lateral beam portion 690.

In the second example embodiment, the connection portion 611 is set at a central portion in the lateral direction. That is, the longitudinal shaft S2 is located at the center of the first lateral beam portion 690 in the lateral direction, specifically, at a position corresponding to a center line passing through the center of the working vehicle 101 in the lateral direction and extending in the front-rear direction.

In the second example embodiment, as depicted in FIGS. 12 to 14 and 17, the first actuator 162 is a cylinder device that is provided along a uniaxial direction and extends and retracts in the uniaxial direction. In association therewith, the actuator coupling portion 676 includes a first coupling portion 676a to which one end portion of the first actuator 162 (cylinder device) in the uniaxial direction (in the second example embodiment, the cylinder end) is coupled and a second coupling portion 676b to which the other end portion of the first actuator 162 (cylinder device) in the uniaxial direction (in the second example embodiment, the rod end) is coupled. In the second example embodiment, the first actuator 162 is located with the uniaxial direction aligned with the guide direction. In the second example embodiment, the first actuator 162 is located on the second coupling frame 673 so as to correspond to a central position on the second coupling frame 673 in the lateral direction.

In association therewith, the first coupling portion 676a is provided on the second coupling frame 673, and the one end portion of the first actuator 162 in the uniaxial direction (in the second example embodiment, the cylinder end) is coupled to the first coupling portion 676a. Meanwhile, the second coupling portion 676b is located at a position opposed to the first coupling portion 676a in the up-down direction with the first actuator 162 interposed therebetween.

That is, the second coupling portion 676b is located at an intermediate (central) position between the pair of guide bodies 167 in the lateral direction. The other end portion of the first actuator 162 in the uniaxial direction (in the second example embodiment, the rod end) is coupled to the second coupling portion 676b. The second coupling portion 676b is coupled to the attachment frame 169. Specifically, the first unit 160 includes at least one support column 695 that is coupled to the attachment frame 169 and extends upward and an upper arm portion 696 that extends forward from the upper end of at least one support column 695 and extends between the pair of guide bodies 167. The second coupling portion 676b is attached to the upper arm portion 696.

In the second example embodiment, as depicted in FIG. 18, at least one support column 695 is coupled to the first lateral beam portion 690 of the attachment frame 169. As depicted in FIGS. 12 to 14, in the second example embodiment, the first unit 160 includes two support columns 695. The two support columns 695 are arranged with a spacing therebetween in the lateral direction. In the second example embodiment, the two support columns 695 are symmetrically arranged based on the center of the first lateral beam portion 690. In association therewith, the first unit 160 includes a lateral beam 697 that couples the upper ends of the two support columns 695 to each other. The upper arm portion 696 extends forward from the lateral beam 697, and a tip portion thereof on the front side is located between the pair of guide bodies 167. In association with the coupling of the first actuator 162 to the first coupling portion 676a on the second coupling frame 673 in the above-described manner, the second coupling portion 676b is attached to the lower surface of the upper arm portion 696, and is coupled to the other end portion of the first actuator 162.

In the second example embodiment, the third actuator 164 is a cylinder device that extends along a uniaxial direction and extends and retracts in the uniaxial direction. In association therewith, to one of the two support columns 695, a shaft (hereinafter, referred to as a first support shaft) S3 that couples one end portion of the third actuator 164 in the uniaxial direction (in the second example embodiment, the rod end) and extends in the front-rear direction is attached. The first support shaft S3 is located at a position separated upward from the first lateral beam portion 690 by a predetermined distance. The first support shaft S3 is attached to the surface of the support column 695 that faces rearward, and protrudes rearward.

The second unit 170 is coupled to the attachment frame 169 of the first unit 160. Thus, when the guided bodies 168 move in the guide direction along the guide bodies 167, the second unit 170 follows the movement of the guided bodies 168 to move in the guide direction. That is, when the first unit 160 takes an orientation in which the longitudinal direction (guide direction) of the guide bodies 167 coincides with the up-down direction (vertical direction), the coupler 106 is in the first state (a standard state), and the second unit 170 supported by the first unit 160 is linearly movable in the up-down direction (vertical direction), which is a linear direction that is orthogonal to an axial line extending in the lateral direction and is orthogonal to the front-rear direction and the lateral direction (see FIG. 9). Further, when the first unit 160 inclines the longitudinal direction (guide direction) of the guide bodies 167 in the front-rear direction, the coupler 106 is in the second state (a changed state), and the second unit 170 supported by the first unit 160 is linearly movable in a linear direction that is orthogonal to the axial line extending in the lateral direction and is inclined with respect to the center line of the vehicle body frame 120 that extends in the front-rear direction (see FIG. 10).

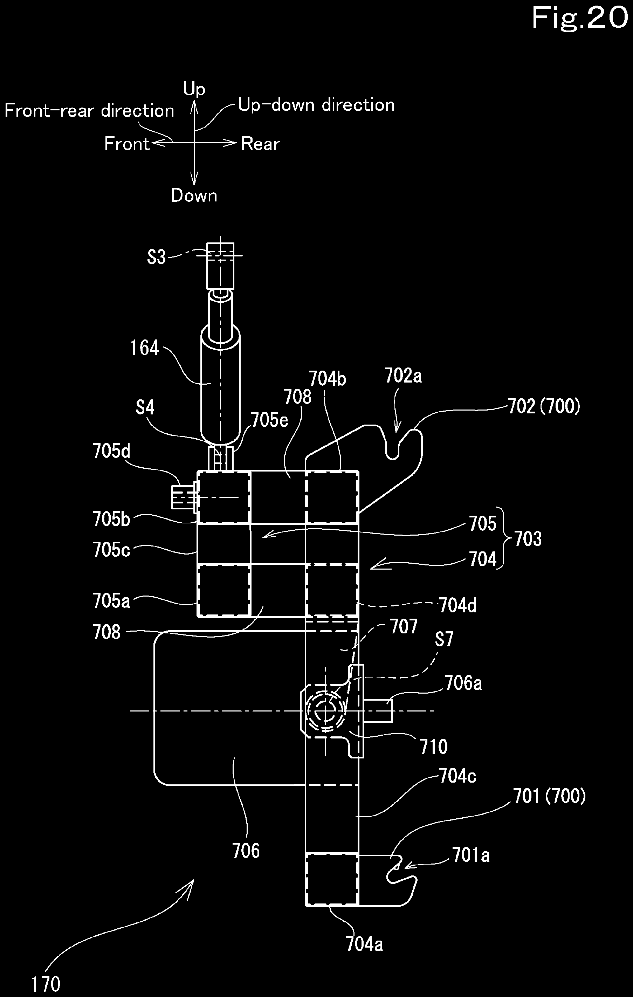

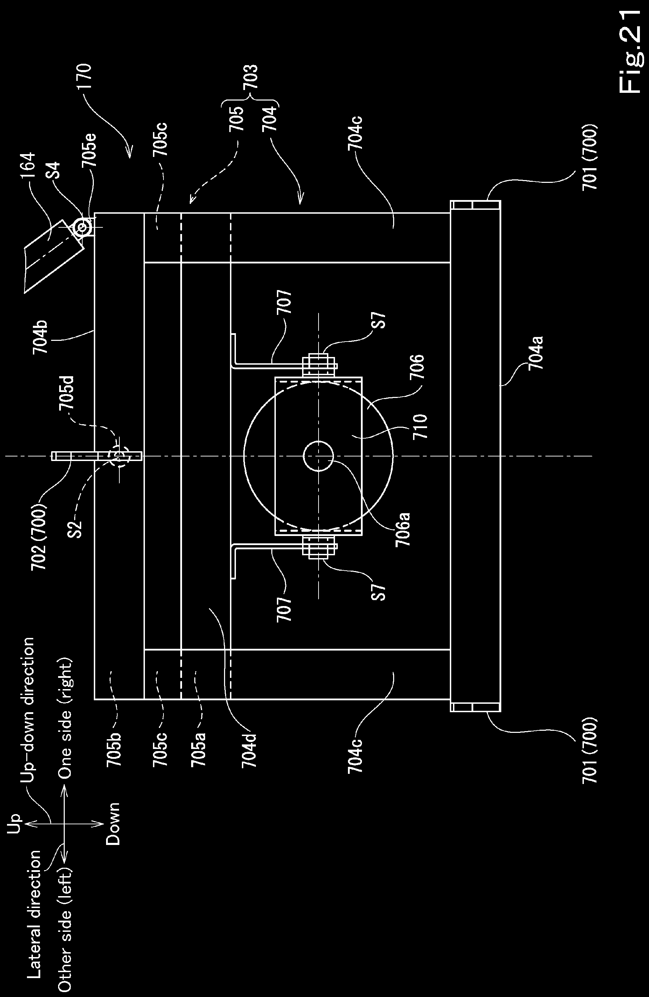

As depicted in FIGS. 20 and 21, the second unit 170 includes the coupling portion 700 to which the working device 110 is coupled. Specifically, the second unit 170 includes the coupling portion 700 and a support frame 703 that supports the coupling portion 700 and is coupled to the first unit 160. In the second example embodiment, in addition to the coupling portion 700 and the support frame 703, the second unit 170 includes the electric motor (hereinafter, referred to as the device electric motor) 706 that drives the working device 110 coupled to the coupling portion 700.

The working device 110 is coupled to the coupling portion 700 of the second unit 170. Here, in order to enable coupling of an existing working device 110 that has been a coupling target of the coupler (three-point linkage) of the related art, the coupling portion 700 is configured to have a structure similar to the coupling structure of the three-point linkage (a structure with tip portions of lower links and a tip portion of an upper link). Specifically, the working device 110 includes a pair of lower locking shafts that extend in the lateral direction and are arranged with a spacing therebetween in the lateral direction and an upper locking shaft located higher than the pair of lower locking shafts and at a position corresponding to an intermediate (central) position between the pair of lower locking shafts in the lateral direction.

In association therewith, the coupling portion 700 can support the working device 110 at three points including the pair of lower locking shafts and the upper locking shaft. Specifically, the coupling portion 700 includes a pair of lower coupling portions 701 that are arranged with a spacing therebetween in the lateral direction corresponding to the arrangement of the pair of lower locking shafts and can each lock the corresponding lower locking shaft. The coupling portion 700 also includes an upper coupling portion 702 located higher than the pair of lower coupling portions 701 corresponding to the location of the upper locking shaft and at a position corresponding to an intermediate (central) position between the pair of lower coupling portions 701 in the lateral direction. The upper coupling portion 702 can lock the upper locking shaft.

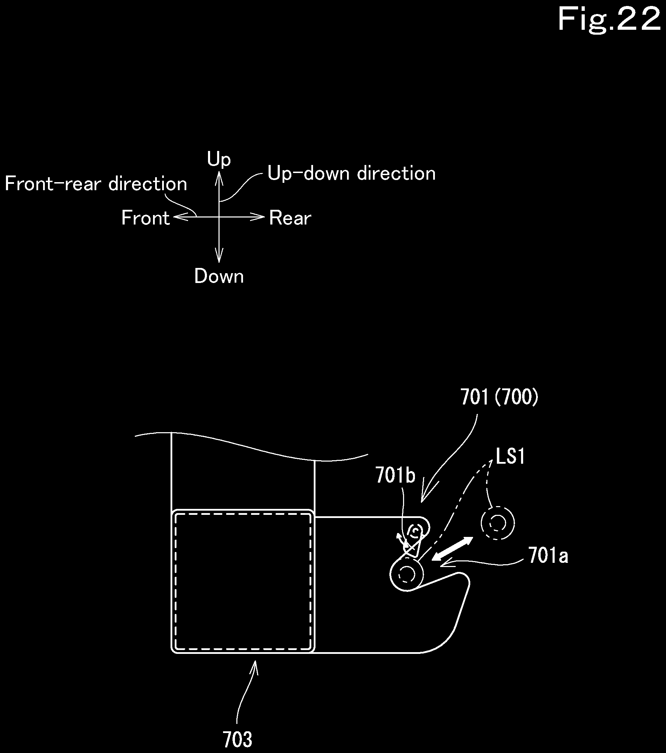

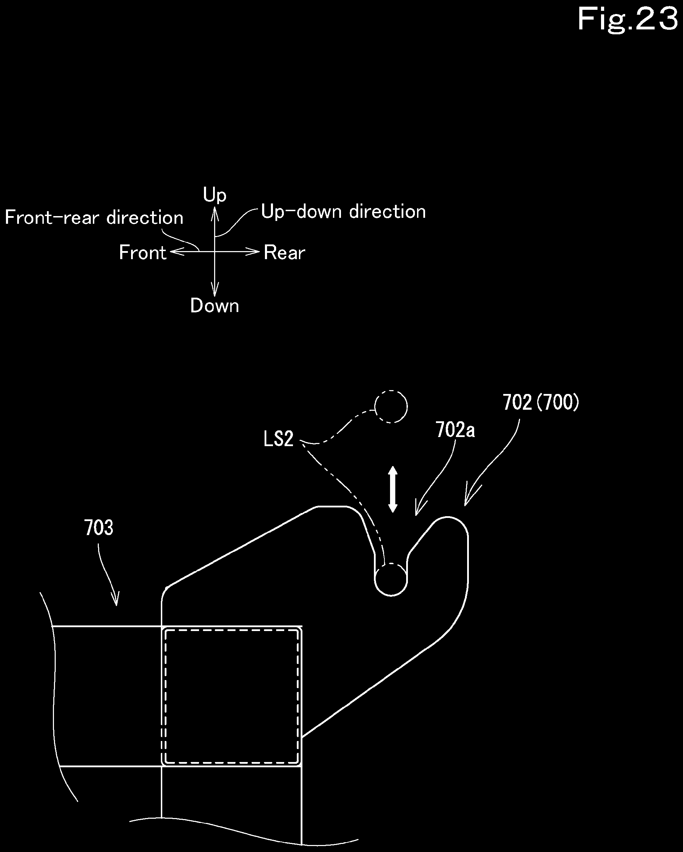

As depicted in FIGS. 22 and 23, each of the pair of lower coupling portions 701 and the upper coupling portion 702 includes a recess 701a or 702a into which a shaft extending in the lateral direction (a lower locking shaft LS1 or an upper locking shaft LS2) can be fitted in the radial direction. The recesses 701a of the pair of lower coupling portions 701 are configured such that the lower locking shaft LS1 can be fitted into and removed from the recess 701a in the front-rear direction (an oblique front-rear direction) (see FIG. 22). Meanwhile, the recess 702a of the upper coupling portion 702 is configured such that the upper locking shaft LS2 can be fitted into and removed from the recess 702a in the up-down direction (see FIG. 23). Each of the pair of lower coupling portions 701 is provided with an engagement claw (stopper) 701b that can engage with the lower locking shaft LS1 in the recess 701a in order to prevent the lower locking shaft LS1 fitted in the recess 701a from falling off. The engagement claw 701b is switchable between a restricting state in which the engagement claw 701b protrudes into the recess 701a and can engage with the lower locking shaft LS1 and a restriction-released state in which the engagement claw 701b is retracted from the inside of the recess 701a.

As depicted in FIGS. 20 and 21, the support frame 703 includes a first attachment portion 704 to which the coupling portion 700 is attached and a second attachment portion 705 that is coupled to the first unit 160 and is directly or indirectly coupled to the first attachment portion 704. The third actuator 164 is a cylinder device that extends along a uniaxial direction and extends and retracts in the uniaxial direction. The third actuator 164 is positioned to connect between the first unit 160 and the second unit 170. In association therewith, the support frame 703 includes a shaft (hereinafter, referred to as a second support shaft) S4 that couples the other end portion of the third actuator 164 in the uniaxial direction (in the second example embodiment, the cylinder end) and extends in the front-rear direction. In the second example embodiment, the support frame 703 includes a bracket 705e that supports the second support shaft S4.

In the second example embodiment, the first attachment portion 704 includes a first lower beam portion 704a to which the pair of lower coupling portions 701 are attached, a first upper beam portion 704b that is located on the upper side relative to the first lower beam portion 704a and to which the upper coupling portion 702 is attached, and at least one first coupling column 704c that couples the first lower beam portion 704a and the first upper beam portion 704b.

The first lower beam portion 704a and the first upper beam portion 704b are arranged with a spacing therebetween in the up-down direction in accordance with the arrangement of the upper coupling portion 702 and the lower coupling portions 701. At least one first coupling column 704c extends in the up-down direction. The upper end thereof is coupled to the first upper beam portion 704b, and the lower end thereof is coupled to the first lower beam portion 704a. In the second example embodiment, the first attachment portion 704 includes two first coupling columns 704c. The two first coupling columns 704c are arranged with a spacing therebetween in the lateral direction. In the second example embodiment, one of the two first coupling columns 704c is coupled to one end portion of the first upper beam portion 704b in the lateral direction and one end portion of the first lower beam portion 704a in the lateral direction, and the other first coupling column 704c is coupled to the other end portion of the first upper beam portion 704b in the lateral direction and the other end portion of the first lower beam portion 704a in the lateral direction. In the second example embodiment, the first lower beam portion 704a, the first upper beam portion 704b, and the first coupling columns 704c include square steel pipes, and are mutually coupled by welding. Thus, the first attachment portion 704 has a rectangular frame shape.

In the second example embodiment, the first attachment portion 704 includes a support beam 704d that supports the device electric motor 706. The support beam 704d extends in the lateral direction, and both ends thereof are coupled to the first coupling columns 704c. The support beam 704d is located at a position between the first upper beam portion 704b and the first lower beam portion 704a and at such a position (height) as to support the device electric motor 706 at a predetermined position. That is, the support beam 704d is located at such a position as to support the device electric motor 706 at a predetermined position such that an output shaft 706a of the device electric motor 706 is located so as to be coupleable to an input shaft that receives power in the working device 110 coupled to the coupling portion 700. The support beam 704d also includes a square steel pipe, and is coupled to the first coupling columns 704c by welding.

In the second example embodiment, a pair of support brackets 707 that support both sides of the device electric motor 706 in the lateral direction are attached to the support beam 704d. The pair of support brackets 707 are arranged with a spacing therebetween in the lateral direction. That is, the pair of support brackets 707 are arranged with a spacing therebetween such that the device electric motor 706 can be interposed therebetween. In the second example embodiment, the pair of support brackets 707 hang downward from the lower surface of the support column. That is, the pair of support brackets 707 support the device electric motor 706 below the support beam 704d. The pair of support brackets 707 are symmetrically arranged based on the center of the support beam 704d in the lateral direction. That is, the pair of support brackets 707 support the device electric motor 706 such that the position of the output shaft 706a of the device electric motor 706 located between the pair of support brackets 707 corresponds to a central position on the support beam 704d in the lateral direction.

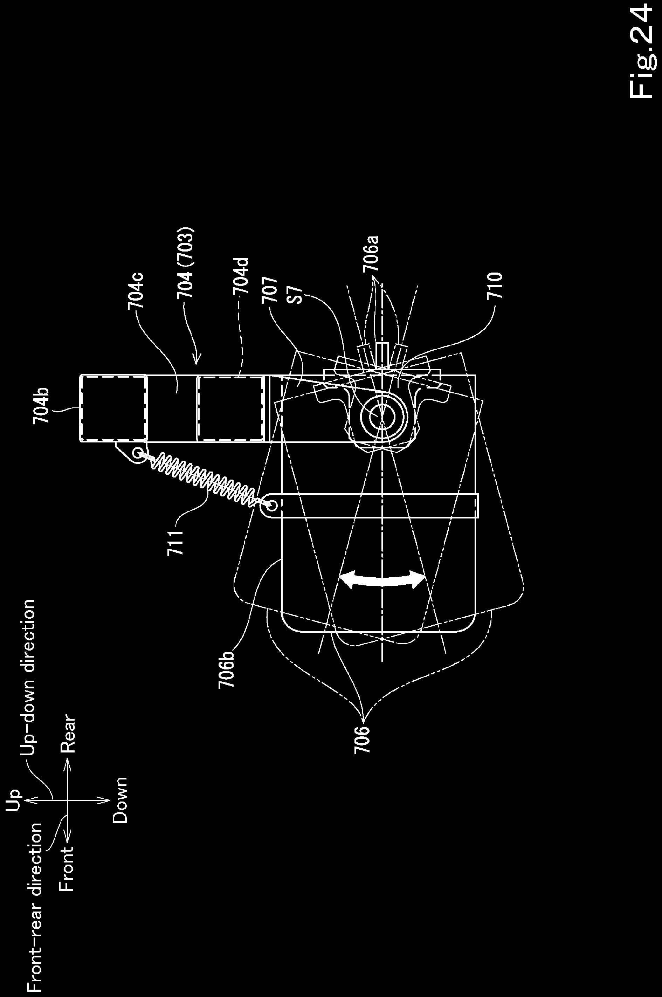

In the second example embodiment, the pair of support brackets 707 support the device electric motor 706 through an attachment fitting 710 attached to the device electric motor 706. Specifically, the attachment fitting 710 includes a pair of support shafts (hereinafter, referred to as motor support shafts) S5 located on both sides of a motor case 706b that houses a rotor of the device electric motor 706. The pair of motor support shafts S7 each extend in the lateral direction. In association therewith, the pair of support brackets 707 pivotally support the pair of motor support shafts S7 of the attachment fitting 710. As depicted in FIG. 24, the device electric motor 706 is supported by the support beam 704d through the pair of support brackets 707 rotatably (swingably) about the motor support shafts S7. Thus, the device electric motor 706 can change the orientation of the output shaft 706a (the direction in which an axis extends) in the up-down direction by rotating (swinging) about the motor support shafts S7. That is, the location (angle) of the output shaft 706a of the device electric motor 706 can be changed so as to be compatible with the position and orientation of a drive input portion of the working device 110 that receives driving to operate.

Because the rotor and the like are housed in the motor case 706b, the center of gravity of the device electric motor 706 is positioned forward of the motor support shafts S7. Thus, a larger load (downward force) acts on the front side of the motor support shafts S7 relative to the rear side thereof, and the device electric motor 706 rotates about the motor support shafts S7. In the second example embodiment, an elastic member (in the second example embodiment, a tension coil spring) 711 that supports the motor case 706b is provided so as to maintain a state in which the output shaft 706a of the device electric motor 706 extends in a non-inclined direction (horizontally or substantially horizontally) in a normal state while allowing a change in the orientation of the output shaft 706a in the up-down direction. The elastic member 711 is positioned to connect between the first attachment portion 704 and the motor case 706b.

As depicted in FIG. 20, the second attachment portion 705 of the second example embodiment includes a second lower beam portion 705a located forward of the support beam 704d, a second upper beam portion 705b located forward of the first upper beam portion 704b, and at least one second coupling column 705c that couples the second lower beam portion 705a and the second upper beam portion 705b.

The second lower beam portion 705a and the second upper beam portion 705b are arranged with a spacing therebetween in the up-down direction in accordance with the arrangement of the support beam 704d and the first upper beam portion 704b. At least one second coupling column 705c extends in the up-down direction. The upper end thereof is coupled to the second upper beam portion 705b, and the lower end thereof is coupled to the second lower beam portion 705a. In the second example embodiment, the second attachment portion 705 includes two second coupling columns 705c. The two second coupling columns 705c are arranged with a spacing therebetween in the lateral direction.

In the second example embodiment, one of the two second coupling columns 705c is coupled to one end portion of the second upper beam portion 705b in the lateral direction and one end portion of the second lower beam portion 705a in the lateral direction, and the other second coupling column 705c is coupled to the other end portion of the second upper beam portion 705b in the lateral direction and the other end portion of the second lower beam portion 705a in the lateral direction. The second lower beam portion 705a, the second upper beam portion 705b, and the second coupling columns 705c also include square steel pipes, and are mutually coupled by welding. Thus, the second attachment portion 705 has a rectangular frame shape having the same shape and the same size as the first attachment portion 704, and is opposed to the first attachment portion 704.

A boss 705d that pivotally supports the longitudinal shaft S2 of the first unit 160 is attached to the second upper beam portion 705b. That is, the boss 705d including a hole into which the longitudinal shaft S2 can be inserted from the front-rear direction is attached to a portion of the second upper beam portion 705b that faces forward. The boss 705d is attached to a central portion of the second upper beam portion 705b in the lateral direction.

In the second example embodiment, the second support shaft S4 is attached to the second upper beam portion 705b. Specifically, the second support shaft S4 is supported by the bracket 705e that is attached to the second upper beam portion 705b and has a protruding piece shape, and extends in the front-rear direction. The second support shaft S4 is located on one end portion of the second upper beam portion 705b in the lateral direction. That is, the second attachment portion 705 includes the bracket 705e that supports the second support shaft S4 on the one end portion of the second upper beam portion 705b in the lateral direction. The bracket 705e protrudes upward from the upper surface of the second upper beam portion 705b. Thus, the second support shaft S4 is located outward of the first support shaft in the lateral direction. As described above, the first support shaft S3 is attached to the support column 695 of the first unit 160, and the second support shaft S4 is attached to the second attachment portion 705 (second upper beam portion 705b) of the second unit. Thus, the third actuator 164 is positioned to connect between the first unit 160 and the second unit 170. As described above, the second support shaft S4 is located outward of the first support shaft S3 in the lateral direction. Thus, due to pivotal attachment of the one end portion of the third actuator 164 to the first support shaft S3 and pivotal attachment of the other end portion of the third actuator 164 to the second support shaft S4, the third actuator 164 (cylinder device) is located in an inclined orientation with respect to the up-down direction or the lateral direction.

The second unit 170 includes at least one longitudinal beam 708 that extends in the front-rear direction and couples the first attachment portion 704 and the second attachment portion 705. In the second example embodiment, the second unit 170 includes four longitudinal beams 708. The four longitudinal beams 708 couple four corners of the first attachment portion 704 having a rectangular frame shape and four corners of the second attachment portion 705 having a rectangular frame shape. The longitudinal beams 708 also include square steel pipes, and are coupled to the first attachment portion 704 and the second attachment portion 705 by welding.

As described above, each of the first actuator 162, the second actuator 163, and the third actuator 164 is the cylinder device that extends and retracts in a uniaxial direction. In the second example embodiment, each of the first actuator 162, the second actuator 163, and the third actuator 164 is an electric cylinder that extends and retracts by being supplied with electric power from the driving battery 105. That is, as depicted in FIGS. 9 to 11, each of the first actuator 162, the second actuator 163, and the third actuator 164 is connected to the driving battery 105 through the power line L.

As depicted in FIG. 11, one end portion of the second actuator 163 in the uniaxial direction is coupled to the first bracket portion 678. In the second example embodiment, the one end portion of the second actuator 163 in the uniaxial direction (in the second example embodiment, the rod end) is coupled to the first bracket portion 678 through a shaft (hereinafter, referred to as a second lateral shaft) S5 extending in the lateral direction, and is coupled rotatably about the second lateral shaft S5.

Further, the other end portion of the second actuator 163 in the uniaxial direction (in the second example embodiment, the cylinder end) is coupled to a bracket 125 projecting from the rear end of the vehicle body frame 120 through a shaft (hereinafter, referred to as a third lateral shaft) S6 extending in the lateral direction, and is coupled rotatably about the third lateral shaft S6. Accordingly, the second actuator 163 is positioned to connect between the first unit 160 and the vehicle body frame 120. Thus, through extension and retraction of the second actuator 163, the first unit 160 and the second unit 170 rotate in the front-rear direction about the first lateral shafts S1 that couple the second bracket portions 679 and the tip portions of the arms 165, and change the orientation thereof.

Further, the third actuator 164 is positioned to connect between the first unit 160 and the second unit 170 as described above. Thus, through retraction and extension of the third actuator 164, as depicted in FIGS. 13 and 14, the second unit 170 rotates about the longitudinal shaft S2 toward one side (the right side) and the other side (left side) in the lateral direction. Thus, the coupler 106 of the second example embodiment can rotate the working device 110 coupled to the coupling portion 700 of the second unit 170 about the longitudinal shaft S2 toward the one side (right side) and the other side (left side) in the lateral direction, and change the orientation thereof in the lateral direction.

As depicted in FIGS. 9 to 11, the device electric motor 706 includes the output shaft 706a directly or indirectly coupled to the drive input portion (input shaft) of the working device 110. That is, the output shaft 706a of the device electric motor 706 is directly coupled to the drive input portion (input shaft) of the working device 110, or is indirectly coupled to the drive input portion (input shaft) of the working device 110 through an intermediate member such as a universal joint. The device electric motor 706 is driven by being supplied with electric power from the vehicle body 102 through the power line L. That is, the device electric motor 706 is connected to the power line L connected to the driving battery 105, and is driven by supply of electric power from the driving battery 105. The device electric motor 706 is for driving the working device 110 including a dynamic functional portion (causing the functional portion to function). Thus, when the working device 110 does not include a dynamic functional portion, the controller 108 instructs the electric circuit switch to open the electric circuit of the power line L, and the supply of electric power (power feed) from the driving battery 105 to the device electric motor 706 is stopped.

The base end portions of the arms 165 are coupled (fixed) to the vehicle body frame 120. In the second example embodiment, the base end portions of the arms 165 are coupled (fixed) to the rear end of the vehicle body frame 120 by welding or bolting. The arms 165 extend rearward in the front-rear direction from the rear end of the vehicle body frame 120. The tip portions of the arms 165 to which the first unit 160 is coupled are located rearward of the traveling device 103 (rear wheels 103b). Thus, the arms 165 support the first unit 160 on the rear side relative to the rear wheels 103b. The coupler 106 of the second example embodiment includes the two arms 165, and the two arms 165 are arranged with a spacing therebetween in the lateral direction. Specifically, the two arms 165 are symmetrically arranged based on the center line of the vehicle body frame 120 that extends in the front-rear direction. That is, the two arms 165 are located at positions separated from the center line of the vehicle body frame 120 by the same distance in the lateral direction.

In the second example embodiment, the first unit 160 is coupled to the tip portion of at least one arm 165 through the first lateral shaft S1 extending in the lateral direction, and is rotatable about the first lateral shaft S1. In the second example embodiment, as described above, the two arms 165 arranged with a spacing therebetween in the lateral direction are provided. Thus, the first unit 160 is coupled to the tip portions of the two arms 165. That is, the first unit 160 is coupled to each of the tip portions of the two arms 165 through the first lateral shaft S1 extending in the lateral direction. The first lateral shafts S1 that couple the tip portions of the two arms 165 and the second bracket portions 679 are concentrically arranged.

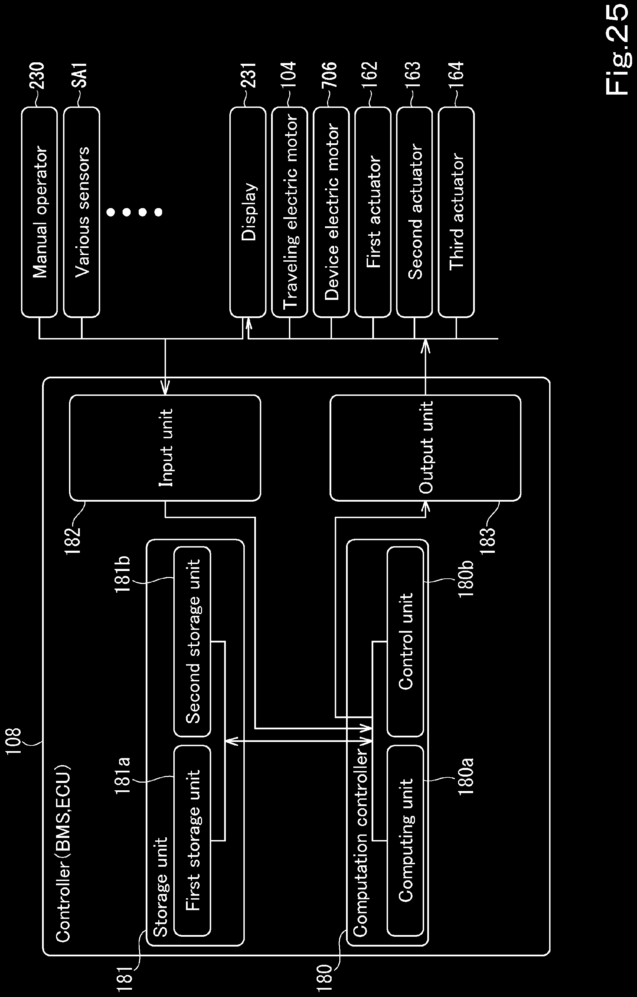

As depicted in FIG. 25, the controller 108 performs power feed control of the driving battery 105. That is, the controller 108 includes a battery management system BMS. In the second example embodiment, in addition to the battery management system BMS, the controller 108 also includes an electronic control unit ECU that performs driving control of devices. In the second example embodiment, the battery management system BMS and the electronic control unit ECU are collectively defined as the controller 108 without being separated from each other.

The controller 108 includes a computation controller 180, a storage unit 181 that stores information used for processing of the computation controller 180, and an input unit 182 that is electrically connected to the computation controller 180 and inputs, to the computation controller 180, an electrical signal as input information from external electrical equipment. The controller 108 also includes an output unit 183 that is electrically connected to the computation controller 180 and outputs an instruction signal (electrical signal) as output information from the computation controller 180 toward external electrical equipment.

The computation controller 180 is a central processing unit (CPU), and includes a computing unit 180a and a control unit 180b. In the controller 108 according to the second example embodiment, the storage unit includes a first storage unit 181a that stores, temporarily or on a short-term basis, information used for processing by the computation controller 180 (the computing unit 180a and the control unit 180b) and a second storage unit 181b that stores, on a long-term basis, information used for processing by the computation controller 180 (the computing unit 180a and the control unit 180b). The first storage unit 181a is a so-called memory, and the second storage unit 181b is a storage such as a hard disk or a solid state drive (SSD).

The input unit 182 and the output unit 183 are so-called interfaces. Electrical equipment that outputs an electrical signal as information is connected to the input unit 182. Meanwhile, electrical equipment to which an electrical signal as information is input is connected to the output unit 183.

Specifically, the manual operator 230, various sensors SA1 that measure a voltage value, a current value, and the like of the driving battery 105, and the like are connected to the input unit 182. Meanwhile, the traveling electric motor 104, the device electric motor 706, the first actuator 162, the second actuator 163, the third actuator 164, and the like (strictly speaking, electric circuit switches on power lines connected thereto) are connected to the output unit 183. In the second example embodiment, the display 231 is of a touch-panel type, and thus is connected to the input unit 182 and the output unit 183 in order to transmit and receive information (signals) to and from the controller 108 (the computation controller 180).

In the working vehicle 101 of the second example embodiment, a state in which the guide bodies 167 (rails) extend in the up-down direction (vertical direction) is defined as a standard orientation of the first unit 160 in which the coupler 106 is in the first state. The controller 108 adjusts and maintains the extension-retraction state of the second actuator 163 such that the first unit 160 is in the standard orientation in a normal state. In the second example embodiment, when the first unit 160 tilts forward with the second actuator 163 retracted, the second unit 170 also tilts forward in association therewith. Thus, for example, when the first unit 160 is set to be in the standard orientation in a state in which the second actuator 163 extends to the maximum length, the controller 108 maintains the second actuator 163 in the maximum-length state.

Further, when a worker performs, on the manual operator 230 (for example, the operation lever), operation relating to height adjustment of the coupling portion 700 or height adjustment (raising/lowering) of the working device 110 coupled to the coupling portion 700, the controller 108 receives an input signal from the manual operator 230 and extends or retracts the first actuator 162 based on the input signal. Thus, the second coupling portion 676b coupled to the other end portion of the first actuator 162 moves in accordance with the extension or retraction of the first actuator 162.

The second coupling portion 676b is connected to the guided bodies 168 through the upper arm portion 696, the support columns 695, and the attachment frame 169, and thus moves in the guide direction (the direction in which the guide bodies 167 (rails) extend). Accordingly, when the coupler 106 is in the first state (the first unit 160 is in the standard orientation), the second coupling portion 676b also moves in the up-down direction together with the guided portions guided by the guide bodies 167 extending in the up-down direction. The second coupling portion 676b is also connected to the second unit 170 through the upper arm portion 696, the support columns 695, and the first frame. Thus, the second unit 170 also moves (rises/lowers) in the up-down direction. That is, the second unit 170 linearly moves in the up-down direction, and the coupling portion 700 or the working device 110 coupled to the coupling portion 700 also rises or lowers vertically (in the vertical direction).

Further, when a worker performs, on the manual operator 230 (for example, the operation lever), operation for changing the first unit 160 from the standard orientation to a tilted orientation, the controller 108 receives an input signal from the manual operator 230 and extends or retracts (in the second example embodiment, retracts) the second actuator 163 based on the input signal. Thus, the first unit 160 rotates about the first lateral shafts S1 at lower end portions of the guide portions (the first lateral shafts S1 that couple the second bracket portions 679 to the tip portions of the arms 165 and extend in the lateral direction) to take the tilted orientation, and the coupler 106 is brought into the second state.

When only the second actuator 163 is extended or retracted, the coupling portion 700 or the working device 110 coupled to the coupling portion 700 follows an arcuate trajectory (path) centered on the first lateral shafts S1 at the lower end portions of the guide portions (the first lateral shafts S1 that couple the second bracket portions 679 to the tip portions of the arms 165 and extend in the lateral direction). In contrast, when the controller 108 extends or retracts the second actuator 163 in conjunction with extension or retraction of the first actuator 162 based on operation on the manual operator 230, the coupling portion 700 or the working device 110 follows a curved (or parabolic) trajectory having, as the center of curvature, the first lateral shafts S1 at the lower end portions of the guide portions (the first lateral shafts S1 that couple the second bracket portions 679 to the tip portions of the arms 165 and extend in the lateral direction).

Accordingly, the coupling portion 700 and the working device 110 coupled thereto can follow a movement trajectory similar to the movement trajectory of the working device 110 based on the coupler 106 (three-point linkage) of the related art. Further, the coupling portion 700 and the working device 110 coupled thereto can be moved along a movement trajectory according to a demand based on a combination of the extension/retraction timing and the extension/retraction speed of the first actuator 162 and the second actuator 163.

Further, when a worker performs, on the manual operator 230, operation for performing horizontal control to maintain the working device 110 in a constant orientation with respect to the ground (working surface), the controller 108 extends or retracts the third actuator 164 such that the orientation of the working device 110 becomes constant regardless of a lateral inclination (rolling) of the working vehicle 101. That is, by extending or retracting the third actuator 164, the controller 108 rotates the second unit 170 about the longitudinal shaft S2 in a direction opposite to the rolling direction of the working vehicle 101 by a rotation angle corresponding to the rolling amount, to keep the orientation of the working device 110 constant.

The present invention is not limited to the above-described second example embodiment, and can be appropriately varied without departing from the gist of the present invention.

### Variations

For example, in the above-described second example embodiment, the coupler 106 includes the arms 165 coupled to the vehicle body frame 120. However, this does not imply any limitation. For example, when the rear end of the vehicle body frame 120 is located rearward of the traveling device 103 (rear wheels 103b), the coupler 106 does not interfere with the rear wheels 103b, and thus the coupler 106 may be directly coupled to the rear end of the vehicle body frame 120.

In the above-described second example embodiment, the coupler 106 (first unit 160) is configured to be rotatable (tiltable) about the first lateral shafts S1 extending in the lateral direction. However, this does not imply any limitation. For example, the coupler 106 (first unit 160) may maintain a constant orientation with respect to the vehicle body 102, and support the second unit 170 linearly movably in the up-down direction (a linear direction that is the up-down direction).

In the above-described second example embodiment, an electric actuator (electric cylinder) is used as each of the first actuator 162, the second actuator 163, and the third actuator 164. However, this does not imply any limitation. For example, when the working vehicle 101 includes a hydraulic system including a hydraulic pump driven by an electric motor, a hydraulic actuator (for example, a hydraulic cylinder) may be used as each of the first actuator 162, the second actuator 163, and the third actuator 164. Further, a hydraulic actuator (for example, a hydraulic cylinder) may be used as at least one of the first actuator 162, the second actuator 163, and the third actuator 164, and electric actuators may be used as the remaining actuators.

In the above-described second example embodiment, a cylinder device (electric cylinder) configure to extend and retract is used as each of the first actuator 162, the second actuator 163, and the third actuator 164. However, this does not imply any limitation. For example, each of the first actuator 162, the second actuator 163, and the third actuator 164 may be a motor. In this case, rotational output of the motor may be used as it is, or, for example, various mechanisms such as a motion conversion mechanism (for example, rack and pinion) that converts rotational motion to linear motion and a reduction mechanism may be provided. It goes without saying that, in association therewith, the actuator coupling portion 676 is also changed appropriately according to the type of actuator used.

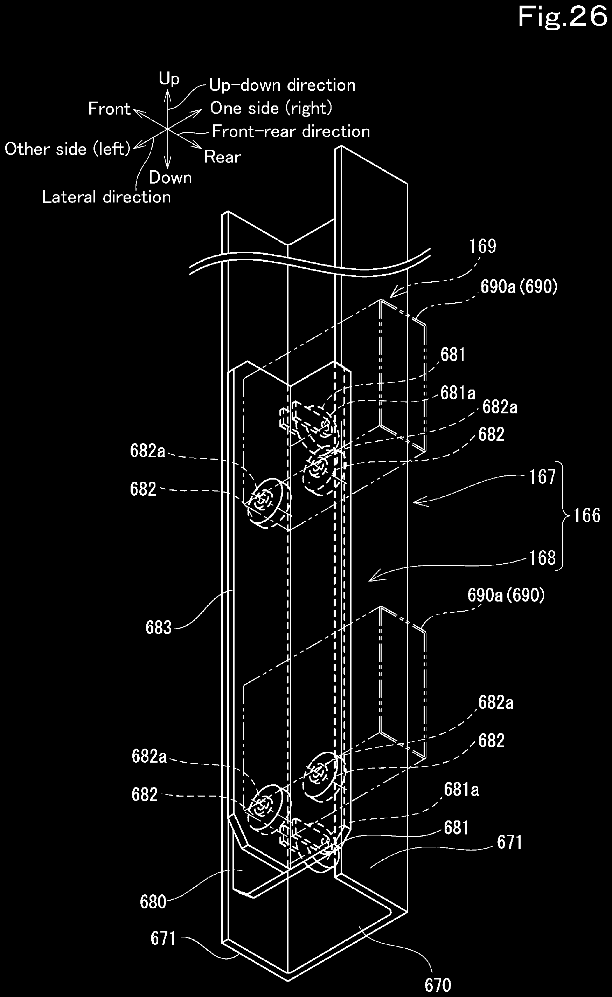

In the guide device 166 of the above-described second example embodiment, the guide bodies 167 (rails) each having a T-shaped cross section are used. However, this does not imply any limitation. For example, as depicted in FIG. 26, the guide bodies 167 (rails) may be ones that each have a U-shaped cross section and each include the base portion 670 that is elongated in one direction and has a strip shape and a pair of protruding portions 671 projecting in a direction orthogonal to a surface of the base portion 670 over the entire length in the longitudinal direction of the base portion 670 at both edge portions of one surface of the base portion 670 in the width direction orthogonal to the longitudinal direction. In this case, the guided bodies 168 can provide operation and effects similar to those of the above-described second example embodiment by each including at least one first guide roller 681 that abuts against the guide body 167 in the lateral direction and at least one second guide roller 682 that abuts against the guide body 167 in the front-rear direction.

Specifically, when the guide bodies 167 (rails) each have a U-shaped cross section, the guide bodies 167 are each located such that the pair of protruding portions 671 are arranged in the front-rear direction. The guided bodies 168 each include at least one first guide roller 681 that is located between the pair of protruding portions 671 and abuts against the base portion 670 from the lateral direction and a pair of second guide rollers 682 that are located between the pair of protruding portions 671 and each abut against the corresponding protruding portion 671 of the pair of protruding portions 671 from the front-rear direction. Also in this case, it is preferable that the guided bodies 168 each include two or more first guide rollers 681 arranged with a spacing therebetween in the up-down direction and two or more pairs of second guide rollers 682 arranged with a spacing therebetween in the up-down direction.

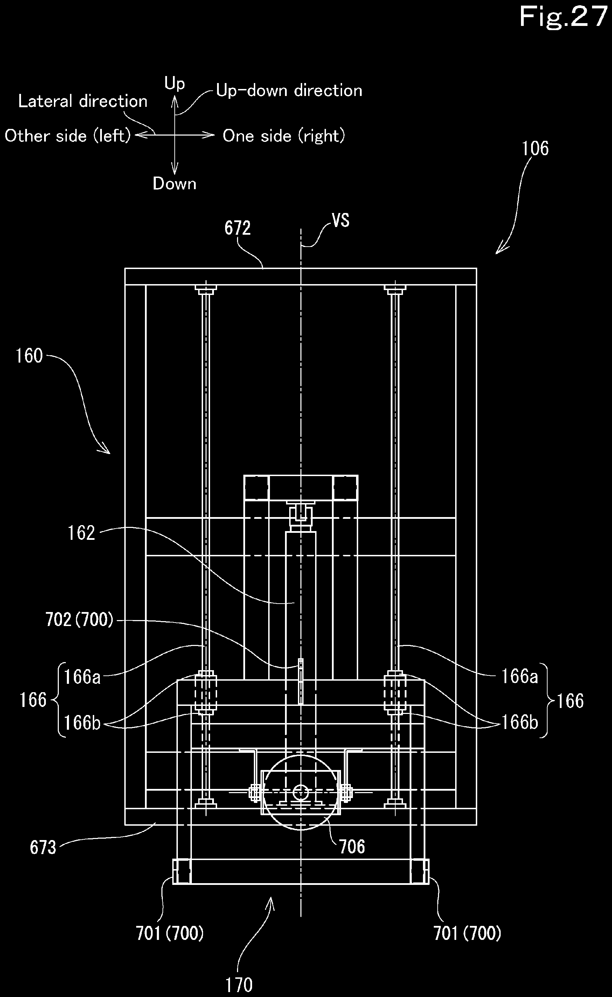

In the above-described second example embodiment, the guide device 166 includes the guide bodies 167 each having a rail shape and the guided bodies 168 each including the first guide rollers 681 and the second guide rollers 682 that roll on the guide body 167. However, this does not imply any limitation. For example, as depicted in FIG. 27, the guide device 166 may include at least one linear shaft 166a having a round rod shape extending straight and at least one linear bush 166b into which at least one linear shaft 166a is inserted. At least one linear bush 166b is movable in an axial direction along at least one linear shaft 166a. In this case, both ends of at least one linear shaft 166a are coupled to the coupling frames 672 and 673 located at two positions as upper and lower positions, and at least one linear bush 166b is coupled to the second unit 170. Thus, similarly to the above-described second example embodiment, the second unit 170 can be guided in a linear direction orthogonal to the lateral direction (the direction in which at least one linear shaft 166a extends). Also in this case, it is sufficient that a pair of linear shafts 166a be provided with a spacing therebetween in the lateral direction and at least one linear bush 166b be located for each of the linear shafts 166a.

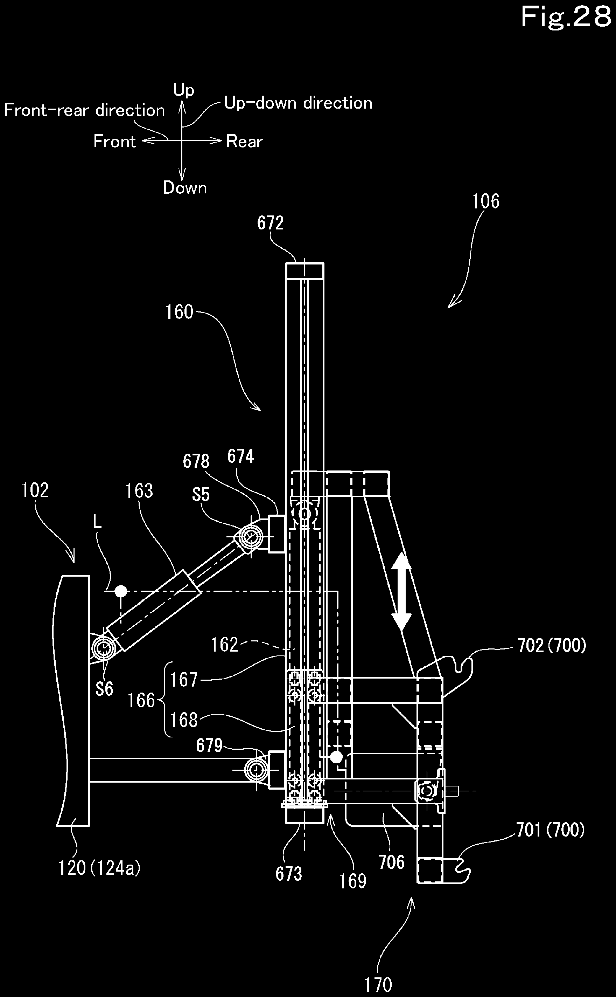

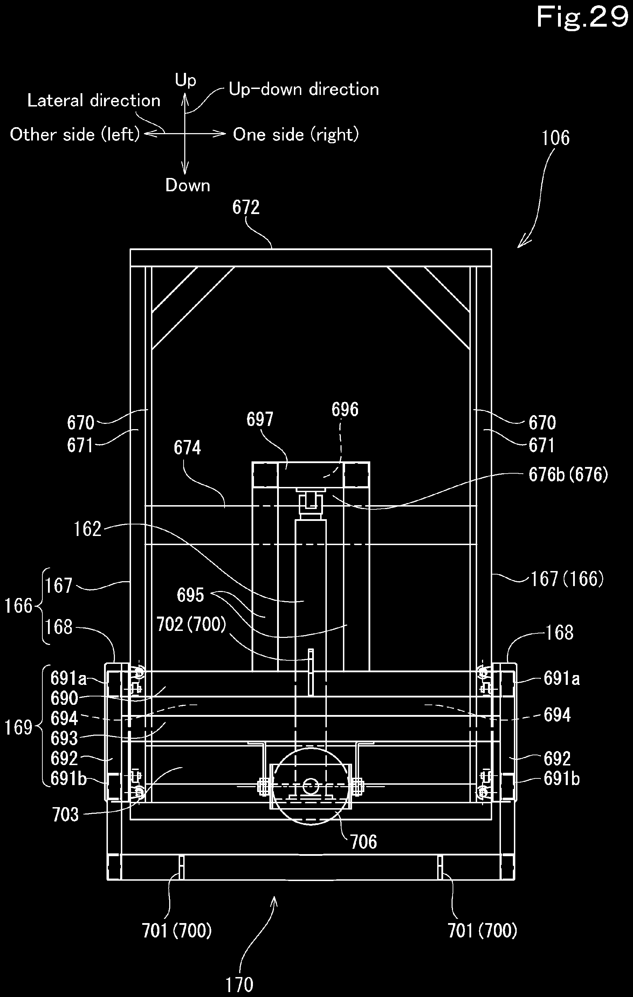

In the above-described second example embodiment, the horizontal control to keep the orientation of the working device 110 horizontal is enabled by coupling the second unit 170 to the first unit 160 through the longitudinal shaft S2 and allowing the second unit 170 to swing (rotate) about the longitudinal shaft S2. However, this does not imply any limitation. For example, when the horizontal control to keep the orientation of the working device 110 horizontal is not required, as depicted in FIGS. 28 and 29, the first unit 160 and the second unit 170 may be integrally coupled without being separated from each other.

In the above-described second example embodiment, the coupler 106 (first unit 160) is rotatable about the first lateral shafts S1 extending in the lateral direction. However, this does not imply any limitation. The coupler 106 may be non-rotatable, that is, may maintain the guide device 166 (guide bodies 167) in a constant state (orientation). In this case, it is sufficient that the direction in which the guide bodies 167 extend (the guide direction) be the up-down direction. This configuration also allows the coupling portion 700 to be linearly movable in the up-down direction.

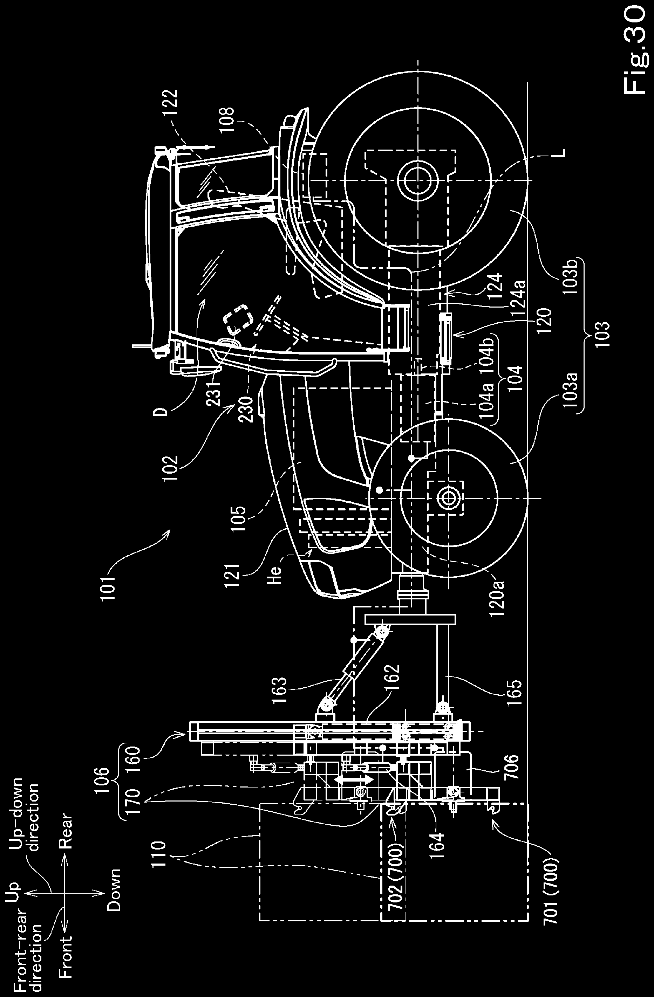

In the above-described second example embodiment, the coupler 106 is attached to the rear end of the vehicle body 102 (vehicle body frame 120). However, this does not imply any limitation. For example, as depicted in FIG. 30, the coupler 106 may be attached to the front end of the vehicle body 102 (vehicle body frame 120). Further, the coupler 106 may be attached to each of the front end and the rear end of the vehicle body 102 (vehicle body frame 120). In any of these cases, a structure similar to that of the above-described second example embodiment can be used as the structure of the coupler 106.

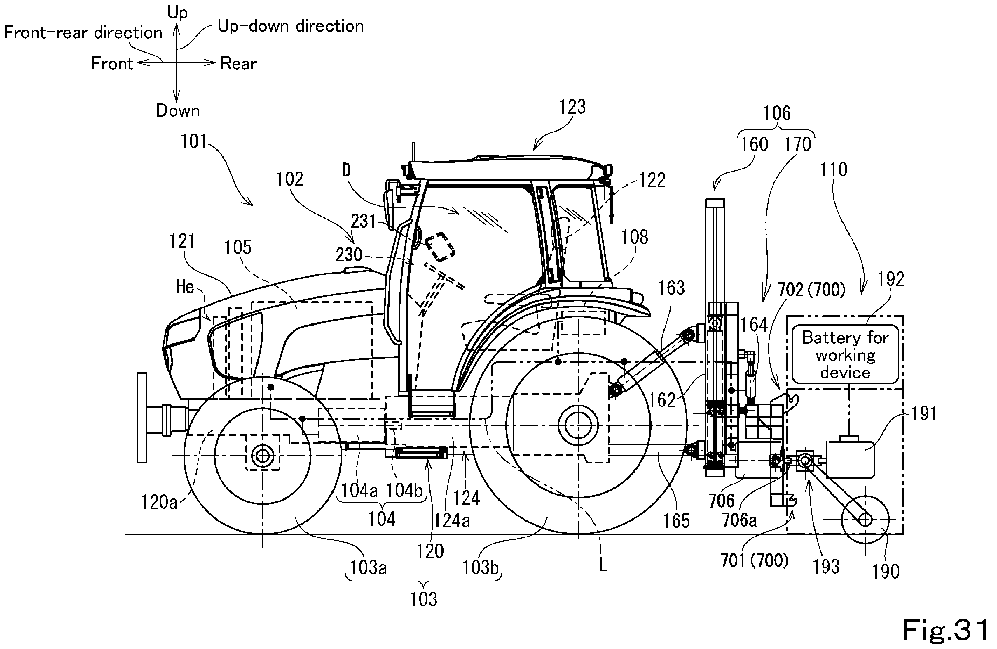

In the above-described second example embodiment, a specific configuration of the working device 110 has not been mentioned. However, for example, as depicted in FIG. 31, the working device 110 may include a functional portion 190 that exhibits a function relating to predetermined work, an electric motor 191 that drives the functional portion 190, and a battery 192 that supplies electric power to the electric motor 191. Specifically, the working device 110 may be a working device 110 (cultivator) including a rotor 190 for cultivation as the functional portion 190, the electric motor 191, the battery 192 that supplies electric power to the electric motor 191, and a driving transmitter 193 that transmits rotation of the electric motor 191 to the rotor 190 (functional portion 190).

In this case, it is preferable that the driving transmitter 193 be configured to be also coupleable to the device electric motor 706 of the coupler 106, and the electric motor 191 of the working device 110 is connected to the controller 108 of the working device 110 and is controlled by the controller 108. Further, the battery 192 of the working device 110 is also connected to the controller 108, and the remaining storage amount thereof is managed by the controller 108. With this configuration, rotation control of the electric motor 191 can be performed by operation of the manual operator 230 of the working vehicle 101. Further, the electric motor 191 can be driven by supply of electric power from the battery 192 of the working device 110 itself, and the rotor 190 as the functional portion 190 can be rotated to perform cultivation.

Accordingly, work can be performed by operation similar to that of the related art. In addition, power consumption of the driving battery 105 of the working vehicle 101 can be reduced. Further, the controller 108 of the working vehicle 101 manages the remaining amount of the battery 192 of the working device 110. Thus, for example, the controller 108 of the working vehicle 101 can recognize that the remaining amount of the battery 192 of the working device 110 has become small or been exhausted.

Accordingly, if the controller 108 issues an instruction to supply electric power from the driving battery 105 to the device electric motor 706 when the controller 108 recognizes that the remaining amount of the battery 192 of the working device 110 has become small or been exhausted, the device electric motor 706 of the coupler 106 can be driven to continuously actuate the functional portion 190. Further, if the controller 108 gives an instruction to charge the battery 192 of the working device 110 by the driving battery 105 of the working vehicle 101 when the controller 108 recognizes that the remaining amount of the battery 192 of the working device 110 has become small or been exhausted, the battery 192 of the working device 110 is charged and work can be resumed.

In the above-described second example embodiment, the traveling device 103 is driven by the traveling electric motor (electric motor) 4. However, this does not imply any limitation. For example, the traveling device 103 may be driven by an internal combustion engine. Further, in the above-described second example embodiment, the coupler 106 is controlled by the controller 108 of the working vehicle 101. However, for example, a controller may be mounted in the working device 110, and the coupler 106 may be controlled by the controller of the working device 110.

The present invention provides working vehicles described in the following items.

(Item A1) A working vehicle 1 including a vehicle body 2 to travel, and a coupler 6 to be attached to the vehicle body 2, wherein a working device U1 that includes a driven shaft US to which power is input and is driven by power input to the driven shaft US is configured to be coupled to the coupler 6, the coupler 6 includes a prime mover 7 including a drive shaft 7S to output power, and the drive shaft 7S of the prime mover 7 is configured to be directly or indirectly coupled to the driven shaft US of the working device U1 such that the drive shaft 7S transmits power to the driven shaft US.

With the working vehicle 1 according to item A1, the working device U1 can be efficiently driven by the power of the prime mover 7 for work provided in the coupler 6, and the driving load on the power source for the vehicle body 2 is also reduced. Thus, work performance is improved.

(Item A2) The working vehicle 1 according to item A1, wherein the prime mover 7 is an electric motor to be driven by being supplied with electric power from the vehicle body 2.

With the working vehicle 1 according to item A2, the energy conversion efficiency is high compared with a working vehicle in which the prime mover 7 is a gasoline engine or a hydraulic motor. Thus, the working device U1 can be driven more efficiently. Thus, the work performance is further improved correspondingly.

(Item A3) The working vehicle 1 according to item A1 or A2, wherein the coupler 6 includes a linkage mechanism 30 pivotally supported by the vehicle body 2 and a hitch frame 16 to be coupled to the linkage mechanism 30 and to which the working device U1 is to be coupled, and the hitch frame 16 includes a bracket 44 to which the prime mover 7 is to be attached.

With the working vehicle 1 according to item A3, the prime mover 7 can be located in the vicinity of the working device U1 coupled to the hitch frame 16. Thus, the power of the prime mover 7 can be output to the working device U1 more efficiently. Accordingly, the work performance is further improved.

(Item A4) The working vehicle 1 according to item A3, wherein the coupler 6 is attached to a front portion or a rear portion of the vehicle body 2 in a traveling direction of the vehicle body 2, and the bracket 44 is coupled to the hitch frame 16 swingably about an axial line CL2 extending in a width direction of the vehicle body 2.

With the working vehicle 1 according to item A4, due to a swing of the bracket 44 about the axial line CL2, the load applied to the coupling portion between the drive shaft 7S of the prime mover 7 and the driven shaft US of the working device U1 during traveling or the like is dispersed. Thus, the power of the prime mover 7 can be output to the working device U1 more efficiently. Accordingly, the work performance is further improved.

(Item A5) The working vehicle 1 according to item A4, wherein the coupler 6 includes a suspender 17 to allow the prime mover 7 to be swingably supported by the hitch frame 16 in a suspended manner.

With the working vehicle 1 according to item A5, the orientation of the prime mover 7 supported by the hitch frame 16 in a suspended manner can be stabilized by the suspender 17. Thus, the power of the prime mover 7 can be output to the working device U1 more efficiently. Accordingly, the work performance is further improved.

(Item A6) The working vehicle 1 according to item A5, wherein the suspender 17 includes a first end portion 17A and a second end portion 17B opposite the first end portion 17A, the first end portion 17A is coupled to an upper portion of the hitch frame 16, and the second end portion 17B is coupled to a position on the prime mover 7 separated from a swing center CL2 of the bracket 44 in a direction of an axial line CL3 of the drive shaft 7S.

With the working vehicle 1 according to item A6, the prime mover 7 can be supported at three different points including the swing center CL2 of the bracket 44, the position separated from the swing center CL2 in the direction of the axial line CL3 of the drive shaft 7S, and the upper portion of the hitch frame 16. Thus, the suspended orientation of the prime mover 7 becomes more stable. This makes it possible to output the power of the prime mover 7 to the working device U1 even more efficiently. Accordingly, the work performance is further improved.

(Item A7) The working vehicle 1 according to item A5 or A6, wherein the suspender 17 is a spring member to apply a predetermined tensile force upward to the prime mover 7.

With the working vehicle 1 according to item A7, due to the elastic force of the suspender 17, the load applied to the coupling portion between the drive shaft 7S of the prime mover 7 and the driven shaft US of the working device U1 during traveling or the like is absorbed. Thus, the power of the prime mover 7 can be output to the working device U1 more efficiently. Accordingly, the work performance is further improved.

(Item A8) The working vehicle 1 according to any one of items A1 to A7, wherein the drive shaft 7S of the prime mover 7 is fittable to the driven shaft US of the working device U1 and is configured to transmit power in a fitted state.

With the working vehicle 1 according to item A8, the power of the prime mover 7 can be directly transmitted to the driven shaft US of the working device U1. Thus, the power of the prime mover 7 can be output to the working device U1 more efficiently. Accordingly, the work performance is further improved.

(Item A9) The working vehicle 1 according to item A8, wherein one of the drive shaft 7S of the prime mover 7 and the driven shaft US of the working device U1 is a hollow shaft, and the other of the drive shaft 7S of the prime mover 7 and the driven shaft US of the working device U1 is a shaft body fittable into the hollow shaft.

With the working vehicle 1 according to item A9, the power of the prime mover 7 can be directly transmitted to the driven shaft US of the working device U1. Thus, the power of the prime mover 7 can be output to the working device U1 more efficiently. Accordingly, the work performance is further improved.

(Item A10) The working vehicle 1 according to any one of items A1 to A9, wherein the coupler 6 includes a universal joint 75 to allow the driven shaft US of the working device U1 to be swingably coupled to the drive shaft 7S of the prime mover 7.

With the working vehicle 1 according to item A10, due to bending of the universal joint 75, the load applied to the coupling portion between the drive shaft 7S of the prime mover 7 and the driven shaft US of the working device U1 during traveling or the like is absorbed. Thus, the power of the prime mover 7 can be output to the working device U1 more efficiently. Accordingly, the work performance is further improved.

(Item A11) The working vehicle 1 according to any one of items A3 to A10, wherein the prime mover 7 includes a housing 70 to hold the drive shaft 7S, the bracket 44 includes a protective member 45 including a metal material having a larger ionization tendency than a base material of the bracket 44, and the protective member 45 is provided in contact with both the housing 70 and the bracket 44.

Rainwater and water splashed from a road surface or the like during work are likely to accumulate at the joint portion between the housing 70 and the bracket 44. Further, when water accumulates at the above joint portion over a long period of time, there is a possibility that the housing 70 and the bracket 44 release electrons and become positively ionized and that the progression of corrosion is accelerated.

However, with the working vehicle 1 according to item A11, even if water adheres to and accumulates at the above joint portion, the protective member 45 releases electrons and becomes positively ionized earlier than the housing 70 and the bracket 44, and sacrificially corrodes. Thus, the occurrence of corrosion at the above joint portion can be delayed. Accordingly, stable performance can be exhibited over a long period of time.

(Item A12) The working vehicle 1 according to item A11, wherein the protective member 45 is removably coupled to the housing 70 or the bracket 44.

With the working vehicle 1 according to item A12, even when sacrificial corrosion of the protective member 45 progresses as described above, the protective member 45 can be appropriately replaced with a new protective member 45. Thus, more stable performance can be exhibited over a long period of time.

(Item A13) The working vehicle 1 according to item A11 or A12, wherein the housing 70 is closely coupled to the bracket 44, and the protective member 45 is located below the housing 70.

Below a portion where the housing 70 and the bracket 44 are closely coupled to each other, water flowing down from the surroundings gathers and tends to remain comparatively easily. Accordingly, corrosion tends to occur correspondingly easily. However, with the working vehicle 1 according to item A13, the protective member 45 is provided below the portion where the housing 70 and the bracket 44 are closely coupled to each other. Thus, the occurrence of corrosion at the closely coupled portion can be delayed. Accordingly, stable performance can be exhibited over a long period of time.

(Item B1) A working vehicle 1 including a vehicle body 2 to travel, a coupler 6 to which a working device U1 is to be coupled, and a movement mechanism 80 to be attached to the vehicle body 2 and to couple and support the coupler 6 movably in a width direction of the vehicle body 2.

With the working vehicle 1 according to item B1, the coupler 6 can be moved in the left-right direction (width direction) of the vehicle body 2 according to a target working position. Thus, work performance is improved. Further, with the working vehicle 1 according to item B1, even when a positional relationship between the vehicle body 2 and the working device U1 slightly deviates in the width direction when the vehicle body 2 and the working device U1 are coupled to each other, the coupler 6 can be moved in the width direction according to the deviation. Thus, the work performance is further improved.

(Item B2) The working vehicle 1 according to item B1, wherein the movement mechanism 80 includes a rail 82 extending in the width direction, a slider 83 coupled to the rail 82 movably in the width direction, and a slider driver 84 to move the slider 83 along the rail 82, and the coupler 6 is provided on the slider 83.

With the working vehicle 1 according to item B2, the coupler 6 can be moved more smoothly in the width direction. Thus, the work performance is further improved.

(Item B3) The working vehicle 1 according to item B2, wherein the rail 82 extends in the width direction orthogonal to a vehicle body center line CL3 passing through a center in the width direction and extending in a traveling direction of the vehicle body 2.

With the working vehicle 1 according to item B3, the coupler 6 can be accurately moved in the width direction of the vehicle body 2. Thus, the work performance is further improved.

(Item B4) The working vehicle 1 according to item B2 or B3, further including a traveling device 3 to support the vehicle body 2 such that the vehicle body 2 is allowed to travel, wherein the traveling device 3 includes a front traveling device 3F located at a front portion of the vehicle body 2 in the traveling direction of the vehicle body 2, and a rear traveling device 3R located at a rear portion of the vehicle body 2 in the traveling direction of the vehicle body 2, and the rail 82 is located rearward of the rear traveling device 3R.

With the working vehicle 1 according to item B4, when the coupler 6 is moved in the width direction of the vehicle body 2, the coupler 6 is less likely to come into contact with the rear traveling device 3R of the vehicle body 2. Thus, the work performance is further improved.

(Item B5) The working vehicle 1 according to any one of items B2 to B4, wherein the coupler 6 includes a prime mover 7 to drive the working device U1.

With the working vehicle 1 according to item B5, the working device U1 can be efficiently driven by power of the prime mover 7 provided in the coupler 6, and the driving load on the power source for the vehicle body 2 is also reduced. Thus, the work performance is further improved.

(Item B6) The working vehicle 1 according to item B5, wherein the prime mover 7 is an electric motor to be driven by being supplied with electric power from the vehicle body 2.

With the working vehicle 1 according to item B6, the energy conversion efficiency is high compared with a working vehicle in which the prime mover 7 is a gasoline engine or a hydraulic motor. Thus, the working device U1 can be driven more efficiently. Thus, the work performance is further improved correspondingly.

(Item B7) The working vehicle 1 according to item B5 or B6, wherein the coupler 6 includes a linkage mechanism 30 pivotally supported by a rear portion of the slider 83, and a hitch frame 16 coupled to the linkage mechanism 30 and to couple the working device U1, and the prime mover 7 is provided on the hitch frame 16.

With the working vehicle 1 according to item B7, the prime mover 7 can be located in the vicinity of the working device U1 coupled to the hitch frame 16. Thus, the power of the prime mover 7 can be output to the working device U1 more efficiently. Accordingly, the work performance is further improved.

(Item B8) The working vehicle 1 according to any one of items B5 to B7, wherein the prime mover 7 is located on a rearward extended line CL4 of a center of the slider 83 in the width direction.

With the working vehicle 1 according to item B8, because the prime mover 7, which is comparatively heavy, is located on the rearward extended line of the center of the slider 83 in the width direction, the slider 83 can be stably moved in the width direction. Thus, the work performance is further improved.

(Item C1) A working vehicle 101 including a vehicle body 102 to travel, and a coupler 106 to be attached to the vehicle body 102, wherein the coupler 106 includes a first unit 160 directly or indirectly supported by the vehicle body 102 and a second unit 170 including a coupling portion 700 to which a working device 110 to perform predetermined work is coupleable, and the first unit 160 supports the second unit 170 linearly movably at least in an up-down direction among linear directions orthogonal to a lateral direction orthogonal to the up-down direction and a front-rear direction.

With the working vehicle 101 according to item C1, because the first unit 160 supports the second unit 170 linearly movably at least in the up-down direction, the coupling portion 700 to which the working device 110 is coupled also linearly moves in the up-down direction. Accordingly, the working vehicle 101 according to item C1 can raise and lower the working device 110 straight at least in the up-down direction.

(Item C2) The working vehicle 101 according to item C1, wherein the first unit 160 includes a guide device 166 to guide the second unit 170 in the up-down direction.

With the working vehicle 101 according to item C2, because the guide device 166 of the first unit 160 guides the second unit 170 in the up-down direction, the second unit 170 can be reliably linearly moved in the up-down direction.

(Item C3) The working vehicle 101 according to item C2, wherein the guide device 166 includes a guide body 167 extending in one of the linear directions and a guided body 168 to be guided by the guide body 167 and to which the second unit 170 is directly or indirectly coupled, and the coupler 106 is configured to maintain the guide body 167 in an orientation in which the guide body 167 extends in the up-down direction when at least the coupling portion 700 is raised or lowered in the up-down direction.

With the working vehicle 101 according to item C3, because the guide device 166 includes the guide body 167 extending in the linear direction and the guided body 168 guided by the guide body 167, the second unit 170 to which the guided body 168 is also coupled also moves straight in the direction in which the guide body 167 extends. Accordingly, by causing the guide body 167 to take the orientation in which the guide body 167 extends in the up-down direction, the second unit 170 linearly moves in the up-down direction.

(Item C4) The working vehicle 101 according to any one of items C1 to C3, wherein the coupler 106 includes a first actuator 162 to linearly move the second unit 170.

With the working vehicle 101 according to item C4, because the first actuator 162 linearly moves the second unit 170, the movement amount and the movement speed of the second unit 170 can also be controlled (adjusted) by controlling the first actuator 162.

(Item C5) The working vehicle 101 according to any one of items C1 to C4, wherein the first unit 160 is rotatable about a shaft (first lateral shaft) S1 extending in the lateral direction.

With the working vehicle 101 according to item C5, because the first unit 160 is rotatable about the first lateral shaft S1 extending in the lateral direction, the first unit 160 can be tilted, and the direction in which the guide body 167 extends can be set to not only the up-down direction but also a direction inclined with respect to the front-rear direction. Thus, the working device 110 coupled to the coupling portion 700 can also be moved along an arcuate trajectory centered on the first lateral shaft S1. Further, by combining tilting of the first unit 160 and linear movement of the second unit 170, the working device 110 coupled to the coupling portion 700 can also be moved so as to follow a trajectory other than a true arc trajectory (for example, a curved trajectory, a parabolic trajectory, or the like).

(Item C6) The working vehicle 101 according to item C5, wherein the coupler 106 includes a second actuator 163 to rotate the first unit 160 about the shaft (first lateral shaft) S1.

With the working vehicle 101 according to item C6, because the second actuator 163 rotates the first unit 160 about the first lateral shaft S1, the rotation amount and the rotation speed of the second unit 170 can also be controlled (adjusted) by controlling the second actuator 163.

(Item C7) The working vehicle 101 according to item C6, wherein the second actuator 163 is a cylinder device to extend and retract and is positioned to connect between the first unit 160 and the vehicle body 102.

With the working vehicle 101 according to item C7, because the second actuator 163 is the cylinder device positioned to connect between the first unit 160 and the vehicle body 102, the orientation of the first unit 160 can be changed without complicating the structure.

(Item C8) The working vehicle 101 according to any one of items C5 to C7, wherein the coupler 106 includes an arm 165 including a base end portion coupled to the vehicle body 102 and a tip portion opposite the base end portion, the arm 165 extending outward from the vehicle body 102 in a direction orthogonal to the up-down direction, and the first unit 160 is coupled to the tip portion of the arm 165 through the shaft (first lateral shaft) S1.

With the working vehicle 101 according to item C8, because the first unit 160 is coupled to the tip portion of the arm 165 extending outward from the vehicle body 102, interference of the first unit 160 with the vehicle body 102 can be reduced. Further, because the first unit 160 is coupled to the tip portion of the arm 165 through the first lateral shaft S1, the orientation of the first unit 160 can also be changed.

(Item C9) The working vehicle 101 according to item C8, wherein a lower end portion of the first unit 160 is coupled to the tip portion of the arm 165 through the shaft (first lateral shaft) S1.

With the working vehicle 101 according to item C9, because the lower end portion of the first unit 160 is coupled to the tip portion of the arm 165 through the first lateral shaft S1, when the first unit 160 rotates about the shaft, the first operation unit does not move on the lower side of the first lateral shaft S1, and the first unit 160 does not interfere with the ground in association with the rotation (movement).

(Item C10) The working vehicle 101 according to any one of items C1 to C9, wherein the second unit 170 includes an electric motor (device electric motor) 706 to drive the working device 110 coupled to the coupling portion 700, the electric motor (device electric motor) 706 being driven by being supplied with electric power from the vehicle body 102.

With the working vehicle 101 according to item C10, because the second unit 170 includes the electric motor (device electric motor) 706 that drives the working device 110, extraction of power from the traveling electric motor 104 to the working device 110 is unnecessary. Thus, deterioration in traveling performance of the working vehicle 101 is prevented or reduced.

(Item C11) The working vehicle 101 according to item C10, wherein the electric motor (device electric motor) 706 is swingable about a support shaft (motor support shaft) S5 extending in the lateral direction.

With the working vehicle 101 according to item C11, because the electric motor (device electric motor) 706 is swingable about the motor support shaft S7 extending in the lateral direction, the orientation of the electric motor (device electric motor) 706 can be set to an orientation according to the form of the working device 110 coupled to the coupling portion 700.

(Item C12) The working vehicle 101 according to any one of items C1 to C11, wherein the first unit 160 includes a connection portion 611 to which the second unit 170 is to be connected, the connection portion 611 including a longitudinal shaft S2 extending in the front-rear direction, and the second unit 170 is connected to the connection portion 611 through the longitudinal shaft S2 and is rotatable about the longitudinal shaft S2.

With the working vehicle 101 according to item C12, because the second unit 170 can be rotated about the longitudinal shaft S2 extending in the front-rear direction, the working device 110 coupled to the coupling portion 700 can also be rotated about the longitudinal shaft S2, and the orientation of the working device 110 in the lateral direction can be adjusted.

(Item C13) The working vehicle 101 according to item C12, wherein the coupler 106 includes a third actuator 164 to rotate the second unit 170 about the longitudinal shaft S2.

With the working vehicle 101 according to item C13, because the third actuator 164 rotates the second unit 170 about the longitudinal shaft S2, the rotation amount and the rotation speed of the third actuator 164 about the longitudinal shaft S2 can be controlled (adjusted) by adjusting the third actuator 164.

(Item C14) The working vehicle 101 according to item C13, wherein the third actuator 164 is a cylinder device to extend and retract and is positioned to connect between the first unit 160 and the second unit 170.

With the working vehicle 101 according to item C14, because the third actuator 164 is a cylinder device, the third actuator 164 can be rotated about the longitudinal shaft S2 without using a complicated configuration.

(Item C15) The working vehicle 101 according to any one of items C1 to C14, wherein the coupler 106 is attached to at least one of a front end or a rear end of the vehicle body 102.

With the working vehicle 101 according to item C15, because the coupler 106 is attached to at least one of the front end or the rear end of the vehicle body 102, the working device 110 can be located at either the front side or the rear side of the vehicle body 102.

While example embodiments of the present invention have been described above, it is to be understood that the example embodiments disclosed herein are considered as examples in all aspects and are not considered as limitations. The scope of the present invention is to be determined not by the foregoing description but by the claims, and is intended to include all variations and modifications within the scope of the claims and their equivalents.

### Reference Signs List

- 1: working vehicle
- 2: vehicle body
- 2A: hood
- 2B: cabin
- 3: traveling device
- 3F: front wheel (front traveling device)
- 3R: rear wheel (rear traveling device)
- 4: operator's seat
- 5: main prime mover
- 6: coupler
- 7: auxiliary prime mover (prime mover)
- 7S: drive shaft
- 11: lift arm
- 12: lower link
- 13: top link
- 14: lift rod
- 15: lift cylinder
- 16: hitch frame
- 17: suspender
- 17A: first end portion
- 17B: second end portion
- 30: linkage mechanism
- 44: bracket
- 45: protective member
- 70: housing
- 75: universal joint
- 80: movement mechanism
- 81: base portion
- 82: rail
- 83: slider
- 84: slider driver
- 85: power transmission shaft
- 86: drive motor
- CL2: swing center
- CL3: axial line of the drive shaft
- U1: working device
- US: driven shaft
- 101: working vehicle
- 102: vehicle body
- 106: coupler
- 110: working device
- 160: first unit
- 162: first actuator (actuator)
- 163: second actuator (actuator)
- 164: third actuator (actuator)
- 165: arm
- 166: guide device
- 167: guide body
- 168: guided body
- 170: second unit
- 190: electric motor
- 611: connection portion
- 700: coupling portion
- 706: device electric motor (electric motor)
- S2: longitudinal shaft

## Claims

1. A working vehicle comprising:
a vehicle body to travel;
a coupler to which a working device is to be coupled; and
a movement mechanism to be attached to the vehicle body and to couple and support the coupler movably in a width direction of the vehicle body.

2. The working vehicle according to claim 1, wherein
the movement mechanism includes:
a rail extending in the width direction;
a slider coupled to the rail movably in the width direction; and
a slider driver to move the slider along the rail; and
the coupler is provided on the slider.

3. The working vehicle according to claim 2, wherein the rail extends in the width direction orthogonal to a vehicle body center line passing through a center in the width direction and extending in a traveling direction of the vehicle body.

4. The working vehicle according to claim 2, further comprising:
a traveling device to support the vehicle body such that the vehicle body is allowed to travel; wherein
the traveling device includes:
a front traveling device located at a front portion of the vehicle body in a traveling direction of the vehicle body; and
a rear traveling device located at a rear portion of the vehicle body in the traveling direction of the vehicle body; and
the rail is located rearward of the rear traveling device.

5. The working vehicle according to any one of claims 2 to 4, wherein the coupler includes a prime mover to drive the working device.

6. The working vehicle according to claim 5, wherein the prime mover is an electric motor to be driven by being supplied with electric power from the vehicle body.

7. The working vehicle according to claim 5, wherein
the coupler includes:
a linkage mechanism pivotally supported by a rear portion of the slider; and
a hitch frame coupled to the linkage mechanism and to couple the working device; and
the prime mover is provided on the hitch frame.

8. The working vehicle according to claim 5, wherein the prime mover is located on a rearward extended line of a center of the slider in the width direction.
